# EUROPEAN PATENT APPLICATION

(11) **EP 4 474 122 A2**
(43) Date of publication of application: **11.12.2024**
(21) Application number: 24175711.1
(22) Date of filing: 14.05.2024
(51) Int. Cl.: B29B 7/72, B29B 7/76, B01F 35/80, B29B 7/58

(54) **METHODS, MIXED RESIN RETENTION ASSEMBLIES, VALVE ASSEMBLIES, AND SYSTEMS FOR INLINE RESIN MIXING**

(30) Priority: 05.06.2023 US 202363506263 P; 18.09.2023 US 202318469033
(71) Applicant: The Boeing Company, Arlington, VA 22202 (US)
(72) Inventor: Tian, Jacquelynn X., Arlington, 22202 (US)
(74) Representative: Arnold & Siedsma

(57) **Abstract**

A method for inline resin mixing includes establishing a flow of a mixed resin, initially directing the mixed resin to a first intermediate volume and subsequently directing the mixed resin to a second intermediate volume after a predetermined triggering event relating to a continuing flow of the mixed resin. A mixed resin retention assembly for inline resin mixing includes an inlet spout and an intermediate vessel. The inlet spout receives a flow of the mixed resin. The intermediate vessel includes the first and second intermediate volumes. A valve assembly for inline resin mixing includes an exterior body, an interior body and a cover. The exterior body includes three input ports and an output port. The interior body is disposed within an interior cavity of the exterior body and defines five flow paths extending from a periphery and intersecting at a central portion of the interior body.

## Description

### FIELD

The present disclosure relates generally to inline resin mixing and, particularly, to mixed resin retention assemblies and valve assemblies in methods and systems for inline resin mixing. Various techniques are contemplated for retaining a mixed resin in the mixed resin retention assemblies during inline resin mixing. Various techniques are also contemplated for valve assemblies with multiple configurations that route mixing components to form the mixed resin and other configurations that route solvents. Additionally, various techniques for controlling the mixed resin retention assemblies and the valve assemblies are contemplated.

### BACKGROUND

Current techniques for inline resin mixing experience unsteady transient flows of mixed resin, particularly during startup of pumps supplying the mixing components by valves and static mixers (also known as in-line mixing elements). Unsteady transient flows produce mixed resins that either must be discarded to avoid manufacturing of non-conforming composite parts. Current techniques for inline resin mixing use three-way valves, for example, to route mixing components to a mixed resin line. The mixed resin line may be provided to static mixer(s) and flowmeter(s).

Accordingly, those skilled in the art continue with research and development efforts to improve techniques for inline resin mixing that reduce waste and increase reliability of mixed resins for composite manufacturing.

### SUMMARY

Disclosed are examples of methods, mixed resin retention assemblies, valve assemblies and systems for inline resin mixing. The following is a non-exhaustive list of examples, which may or may not be claimed, of the subject matter according to the present disclosure.

In an example, the disclosed method for inline resin mixing includes: (1) establishing a flow of a mixed resin that includes a first mixing component and a second mixing component; (2) directing at least an initial portion of the mixed resin to a first intermediate volume; and (3) subsequently directing a remainder of the mixed resin to a second intermediate volume after a predetermined triggering event relating to a continuing flow of the mixed resin.

The first mixing component may comprise at least one of a thermoset resin, an epoxy resin, a polyester resin and a thermoplastic resin.

The second mixing component may comprise at least one of a thermoset hardener, an epoxy hardener, a polyester hardener, a hardener additive and a catalyst.

The predetermined triggering event may indicate a ratio of the first mixing component to the second mixing component in the flow is within an acceptable tolerance of a predetermined threshold. Preferably, prior to the predetermined triggering event, the ratio of the first mixing component to the second mixing component in the flow is not within the acceptable tolerance of the predetermined threshold and unreliable.

The method may further comprise receiving the flow of the mixed resin at an inlet spout configured to initially direct the mixed resin to the first intermediate volume and configured to subsequently direct the mixed resin to the second intermediate volume. Preferably, an intermediate vessel comprises the first intermediate volume and the second intermediate volume. Further preferably, the intermediate vessel further comprises a first base level, a second base level above the first base level, a connecting wall between an interior portion of the first base level and an interior portion of the second base level and an exterior wall extending from an exterior portion of the first base level and an exterior portion of the second base level to an opening to the intermediate vessel, the first intermediate volume defined from the first base level upward to the second base level, the second intermediate volume defined from the second base level upward toward the opening. Even further preferably, the intermediate vessel further comprises an outlet disposed along the exterior wall for dispensing mixed resin from the second intermediate volume, the outlet disposed above the first intermediate volume such that the mixed resin in the first intermediate volume is not dispensed through the outlet when the mixed resin is dispensed from the second intermediate volume. Even further preferably, the method further comprises moving at least one of the inlet spout and the intermediate vessel from a first position in which the mixed resin is directed to the first intermediate volume to a second position in which the mixed resin is directed to the second intermediate volume after the predetermined triggering event, wherein optionally the inlet spout is configured to expand/extend from the first position to the second position in response to the predetermined triggering event, wherein preferably the inlet spout is configured to compress/retract from the second position to the first position after conclusion of the continuing flow of the mixed resin to the second intermediate volume. Further preferably, the inlet spout is configured to swivel from the first position to the second position in response to the predetermined triggering event. Further preferably, the intermediate vessel is configured to move from the first position to the second position in response to the predetermined triggering event. Further preferably, the intermediate vessel further comprises a partitioning wall extending from the first base level toward the opening of the intermediate vessel to physically isolate the first intermediate volume from the second intermediate volume, wherein optionally the method further comprises draining the mixed resin from the first intermediate volume after the mixed resin is directed to the second intermediate volume.

The intermediate vessel may comprise the first intermediate volume and the second intermediate volume, wherein preferably the intermediate vessel further comprises a base level and an exterior wall extending from an exterior portion of the base level to an opening to the intermediate vessel. Further preferably, the intermediate vessel further comprises a partitioning wall extending from the base level toward the opening of the intermediate vessel to physically isolate the first intermediate volume from the second intermediate volume. Even further preferably, the method may comprise moving at least one of the inlet spout and the intermediate vessel from a first position in which the mixed resin is directed to the first intermediate volume to a second position in which the mixed resin is directed to the second intermediate volume after the predetermined triggering event, preferably wherein the inlet spout is configured to expand/extend from the first position to the second position in response to the predetermined triggering event, and even more preferably wherein the inlet spout is configured to compress/retract from the second position to the first position after conclusion of the continuing flow of the mixed resin to the second intermediate volume. Optionally, the inlet spout is configured to swivel from the first position to the second position in response to the predetermined triggering event. The intermediate vessel may also be configured to move from the first position to the second position in response to the predetermined triggering event. The method may comprise draining the mixed resin from the first intermediate volume after the mixed resin is directed to the second intermediate volume. Optionally, the intermediate vessel further comprises an outlet disposed along the exterior wall for dispensing mixed resin from the second intermediate volume, the outlet disposed above the first intermediate volume such that the mixed resin in the first intermediate volume is not dispensed through the outlet when the mixed resin is dispensed from the second intermediate volume, the first intermediate volume defined from the base level upward to the outlet, the second intermediate volume defined from the first intermediate volume upward toward the opening.

The method may further comprise: agitating the mixed resin in the second intermediate volume; heating the mixed resin in the second intermediate volume to a predetermined temperature; maintaining the mixed resin in the second intermediate volume at the predetermined temperature; and insulating the mixed resin in the second intermediate volume to facilitate maintaining the predetermined temperature. Preferably, at least one agitation device is disposed such that the agitating of the mixed resin in the second intermediate volume does not agitate the mixed resin in the first intermediate volume. Preferably, the first intermediate volume and the second intermediate volume are physically isolated such agitation of the mixed resin in the second intermediate volume does not agitate the mixed resin in the first intermediate volume. The method may further comprise heating the mixed resin in the first intermediate volume to the predetermined temperature; and maintaining the mixed resin in the first intermediate volume at the predetermined temperature.

The method may further comprise monitoring a parameter associated with the flow of the mixed resin to obtain a measurement; comparing the measurement to a predetermined threshold associated with the predetermined triggering event; and changing the directing of the mixed resin from the first intermediate volume to the second intermediate volume after the measurement exceeds the predetermined threshold. Preferably, the measurement comprises at least one of a flow time measurement, a mixed resin viscosity measurement, a mixed resin flow measurement, a mixed resin volume measurement, a mixed resin weight measurement and a mixed resin concentration measurement. Further preferably, the flow time measurement is based on an elapsed time measurement from a start of the continuing flow of the mixed resin, wherein optionally the predetermined threshold for the elapsed time measurement is about 30 seconds from the start of the continuing flow of the mixed resin. Further preferably, the mixed resin viscosity measurement is based on measurements of a dynamic mixed resin pressure and a mixed resin temperature by a viscometer. Even further preferably, the mixed resin flow measurement is based on measurements by ultrasonic sensors. Even further preferably, the mixed resin volume measurement is based on a fluid level measurement for the first intermediate volume, wherein optionally the predetermined threshold for the fluid level measurement is indicative of about 0.431 liters of mixed resin in the first intermediate volume. Preferably, the mixed resin weight measurement is based on a mixed resin weight measurement for the first intermediate volume, wherein optionally the predetermined threshold for the mixed resin weight measurement is indicative of about 0.5 kilograms of mixed resin for the first intermediate volume. Preferably, the mixed resin concentration measurement is based on a concentration measurement by a refractometer, optionally wherein the predetermined threshold for the concentration measurement is indicative of at least one of about two-thirds concentration of the first mixing component and about one-third concentration of the second mixing component. The method may further comprise comparing the measurement to a second predetermined threshold associated with conclusion of the continuing flow of the mixed resin to the second intermediate volume; after the measurement is more than the second predetermined threshold, adjusting direction of the mixed resin from the second intermediate volume to the first intermediate volume such that a next flow of the mixed resin would be initially directed to the first intermediate volume; and draining the mixed resin from the first intermediate volume, preferably wherein the measurement comprises at least one of a mixed resin viscosity measurement, a mixed resin flow measurement and a mixed resin concentration measurement.

The method may further comprise dispensing the mixed resin from the second intermediate volume to a next stage of processing. Preferably, the next stage of processing comprises at least one of at least one resin infusion tool, at least one resin molding tool and at least one compression molding tool.

The method may further comprise dispensing the mixed resin from the second intermediate volume to at least one resin infusion tool. Preferably, the dispensing comprises pumping the mixed resin from the second intermediate volume to the at least one resin infusion tool. Further preferably, an outlet for the dispensing of the mixed resin from the second intermediate volume is disposed such that the mixed resin in the first intermediate volume is not dispensed through said outlet. Even further preferably, the first intermediate volume and the second intermediate volume are physically isolated such that mixed resin is not dispensed from the first intermediate volume.

The method may further comprise dispensing the mixed resin from the second intermediate volume to at least one resin molding tool. Preferably, the dispensing comprises pumping the mixed resin from the second intermediate volume to the at least one resin molding tool. Further preferably, an outlet for the dispensing of the mixed resin from the second intermediate volume is disposed such that mixed resin from the first intermediate volume is not dispensed through said outlet. Even further preferably, the first intermediate volume and the second intermediate volume are physically isolated such that mixed resin is not dispensed from the first intermediate volume.

The method may further comprise draining the mixed resin from the first intermediate volume after the mixed resin is directed to the second intermediate volume.

In an example, the disclosed mixed resin retention assembly for inline resin mixing includes an inlet spout and an intermediate vessel. The inlet spout is configured to receive a flow of a mixed resin from a mixed resin supply subsystem. The mixed resin includes a first mixing component and a second mixing component. The intermediate vessel includes a first intermediate volume and a second intermediate volume. The first intermediate volume configured to hold at least an initial portion of the mixed resin. The second intermediate volume is configured to hold a remainder of the mixed resin. The inlet spout and the intermediate vessel are configured such that the mixed resin is initially directed to the first intermediate volume and subsequently directed to the second intermediate volume in response to a predetermined triggering event related to a continuing flow of the mixed resin.

The first mixing component may comprise at least one of a thermoset resin, an epoxy resin, a polyester resin and a thermoplastic resin.

The second mixing component may comprise at least one of a thermoset hardener, an epoxy hardener, a polyester hardener, a hardener additive and a catalyst.

The predetermined triggering event may indicate a ratio of the first mixing component to the second mixing component in the flow is within an acceptable tolerance of a predetermined threshold. Preferably, prior to the predetermined triggering event, the ratio of the first mixing component to the second mixing component in the flow is not within the acceptable tolerance of the predetermined threshold and unreliable.

The intermediate vessel may further comprise a first base level, a second base level above the first base level, a connecting wall between an interior portion of the first base level and an interior portion of the second base level and an exterior wall extending from an exterior portion of the first base level and an exterior portion of the second base level to an opening to the intermediate vessel, the first intermediate volume defined from the first base level upward to the second base level, the second intermediate volume defined from the second base level upward toward the opening. Preferably, the intermediate vessel further comprises an outlet disposed along the exterior wall for dispensing the mixed resin from the second intermediate volume, the outlet disposed above the first intermediate volume such that the mixed resin in the first intermediate volume is not dispensed through the outlet when the mixed resin is dispensed from the second intermediate volume. The assembly may further comprise a positioning assembly configured to move at least one of the inlet spout and the intermediate vessel from a first position in which the mixed resin is directed to the first intermediate volume and a second position in which the mixed resin is directed to the second intermediate volume after the predetermined triggering event. Preferably, the positioning assembly is configured to expand/extend the inlet spout from the first position to the second position in response to the predetermined triggering event, wherein optionally the positioning assembly is configured to compress/retract the inlet spout from the second position to the first position after conclusion of the continuing flow of the mixed resin to the second intermediate volume. Preferably, the positioning assembly is configured to swivel the inlet spout from the first position to the second position in response to the predetermined triggering event. Further preferably, the positioning assembly is configured to move the intermediate vessel from the first position to the second position in response to the predetermined triggering event.

The intermediate vessel may further comprise a base level and an exterior wall extending from an exterior portion of the base level to an opening to the intermediate vessel. Preferably, the intermediate vessel further comprises a partitioning wall extending from the base level toward the opening of the intermediate vessel to physically isolate the first intermediate volume from the second intermediate volume. The assembly may further comprise a positioning assembly configured to move at least one of the inlet spout and the intermediate vessel from a first position in which the mixed resin is directed to the first intermediate volume and a second position in which the mixed resin is directed to the second intermediate volume after the predetermined triggering event. Preferably, the positioning assembly is configured to expand/extend the inlet spout from the first position to the second position in response to the predetermined triggering event, wherein optionally the positioning assembly is configured to compress/retract the inlet spout from the second position to the first position after conclusion of the continuing flow of the mixed resin to the second intermediate volume. Preferably, the positioning assembly is configured to swivel the inlet spout from the first position to the second position in response to the predetermined triggering event. Further preferably, the positioning assembly is configured to move the intermediate vessel from the first position to the second position in response to the predetermined triggering event. The intermediate vessel may further comprise an outlet disposed along the exterior wall for dispensing mixed resin from the second intermediate volume, the outlet disposed above the first intermediate volume such that the mixed resin in the first intermediate volume is not dispensed through the outlet when the mixed resin is dispensed from the second intermediate volume, the first intermediate volume defined from the base level upward to the outlet, the second intermediate volume defined from the first intermediate volume upward toward the opening.

The assembly may further comprise: at least one agitation device configured to agitate the mixed resin in the second intermediate volume; at least one heating device configured to heat the mixed resin in the second intermediate volume to a predetermined temperature; a heating control system configured to control the at least one heating device and configured to maintain the mixed resin in the second intermediate volume at the predetermined temperature; and at least one insulating device configured to insulate the mixed resin in the second intermediate volume to facilitate maintaining the predetermined temperature. Preferably, the at least one agitation device is disposed such that agitation of the mixed resin in the second intermediate volume does not agitate the mixed resin in the first intermediate volume. Further preferably, the at least one heating device is configured to heat the mixed resin in the first intermediate volume to the predetermined temperature, and wherein the heating control system is configured to maintain the mixed resin in the first intermediate volume at the predetermined temperature.

The assembly may further comprise at least one monitoring device configured to detect at least one parameter associated with the flow of the mixed resin to obtain at least one measurement; a positioning control system in operative communication with the at least one monitoring device to receive the at least one measurement, wherein the positioning control system is configured to compare the at least one measurement to a corresponding at least one predetermined threshold associated with the predetermined triggering event; and a positioning assembly configured to move at least one of the inlet spout and the intermediate vessel from a first position in which the mixed resin is directed to the first intermediate volume and a second position in which the mixed resin is directed to the second intermediate volume after the predetermined triggering event, and wherein the positioning control system is in operative communication with the positioning assembly, the positioning control system configured to control movement of the positioning assembly between the first position and the second position in response to the predetermined triggering event. Preferably, the at least one measurement comprises at least one of a flow time measurement, a mixed resin viscosity measurement, a mixed resin flow measurement, a mixed resin volume measurement, a mixed resin weight measurement and a mixed resin concentration measurement. Further preferably, the at least one monitoring device comprises at least one of a timer configured to monitor elapsed time from a start of the continuing flow of the mixed resin, a viscometer configured to monitor a dynamic mixed resin pressure and a mixed resin temperature associated with the continuing flow of the mixed resin, ultrasonic sensors configured to measure the continuing flow of the mixed resin, a fluid sensor configured to detect a fluid level that indicates the first intermediate volume is full, a scale configured to detect a weight that indicates the first intermediate volume is full, a refractometer configured to monitor a concentration of the continuing flow of mixed resin.

The assembly may further comprise an outlet configured to dispense the mixed resin from the second intermediate volume to at least one resin infusion tool. Preferably, the outlet is configured to interface with a mixed resin dispensing subsystem, the mixed resin dispensing subsystem configured to pump the mixed resin from the second intermediate volume to the at least one resin infusion tool. Further preferably, the outlet is disposed such that the mixed resin in the first intermediate volume is not dispensed through said outlet. Even further preferably, the first intermediate volume and the second intermediate volume are physically isolated such that the outlet is not in fluidic communication with the first intermediate volume.

The assembly may further comprise an outlet configured to dispense the mixed resin from the second intermediate volume to at least one resin molding tool. Preferably, the outlet is configured to interface with a mixed resin dispensing subsystem, the mixed resin dispensing subsystem configured to pump the mixed resin from the second intermediate volume to the at least one resin molding tool. Further preferably, the outlet is disposed such that mixed resin from the first intermediate volume is not dispensed through said outlet. Even further preferably, the first intermediate volume and the second intermediate volume are physically isolated such that the outlet is not in fluidic communication with the first intermediate volume.

In an example, the disclosed system for inline resin mixing includes a mixed resin supply subsystem and a mixed resin retention assembly. The mixed resin supply subsystem includes a first reservoir, a first pump, a second reservoir, a second pump, a three-way valve, a plurality of first supply lines, a plurality of second supply lines and at least one mixed resin supply line. The first reservoir is configured to hold a volume of a first mixing component. The first pump is configured to draw the first mixing component from the first reservoir. The second reservoir is configured to hold a volume of a second mixing component. The second pump is configured to draw the second mixing component from the second reservoir. The three-way valve includes a first inlet connection, a second inlet connection and an outlet connection. The three-way valve is configured to receive the first mixing component from the first pump at the first inlet connection. The three-way valve is also configured to receive the second mixing component from the second pump at the second inlet connection. The three-way valve is further configured to establish, and preferably direct, a flow of a mixed resin to the outlet connection in conjunction with the first and second pumps drawing the first and second mixing components from the first and second reservoirs respectively. The first and second pumps send the first and second mixing components respectively through (i) the plurality of first supply lines interconnecting the first reservoir, the first pump and the first inlet connection of the three-way valve and (ii) the plurality of second supply lines interconnecting the second reservoir, the second pump and the second inlet connection of the three-way valve. The at least one mixed resin supply line connected to the outlet connection of the three-way valve. The mixed resin retention assembly includes an inlet spout and an intermediate vessel. The inlet spout connected to the at least one mixed resin supply line. The inlet spout is configured to receive the flow of the mixed resin via the at least one mixed resin supply line. The intermediate vessel includes a first intermediate volume and a second intermediate volume. The first intermediate volume is configured to hold at least an initial portion of the mixed resin. The second intermediate volume is configured to hold a remainder of the mixed resin.

The first pump may comprise a first gear pump and the second pump comprises a second gear pump.

The mixed resin supply subsystem may further comprise an inline mixing element between the three-way valve and the inlet spout of the mixed resin retention assembly, wherein the at least one mixed resin supply line comprises a plurality of mixed resin supply lines interconnecting the three-way valve, the inline mixing element and the inlet spout.

The mixed resin retention assembly may further comprise: at least one agitation device configured to agitate the mixed resin in the second intermediate volume; at least one heating device configured to heat the mixed resin in the second intermediate volume to a predetermined temperature; a heating control system configured to control the at least one heating device and configured to maintain the mixed resin in the second intermediate volume at the predetermined temperature; and at least one insulating device configured to insulate the mixed resin in the second intermediate volume to facilitate maintaining the predetermined temperature. Preferably, the at least one heating device is configured to heat the mixed resin in the first intermediate volume to the predetermined temperature, and wherein the heating control system is configured to maintain the mixed resin in the first intermediate volume at the predetermined temperature.

The mixed resin retention assembly may further comprise at least one monitoring device configured to detect at least one parameter associated with the flow of the mixed resin to obtain at least one measurement; a positioning control system in operative communication with the at least one monitoring device to receive the at least one measurement, wherein the positioning control system is configured to compare the at least one measurement to a corresponding at least one predetermined threshold associated with a predetermined triggering event; and a positioning assembly configured to move at least one of the inlet spout and the intermediate vessel from a first position in which the mixed resin is directed to the first intermediate volume and a second position in which the mixed resin is directed to the second intermediate volume after the predetermined triggering event, and wherein the positioning control system is in operative communication with the positioning assembly, the positioning control system configured to control movement of the positioning assembly between the first position and the second position in response to the predetermined triggering event.

The mixed resin retention assembly may further comprise an outlet configured to dispense the mixed resin from the second intermediate volume. Preferably, the system further comprises a mixed resin dispensing subsystem configured to receive the mixed resin from the second intermediate volume via the outlet of the mixed resin retention assembly and configured to pump the mixed resin from the second intermediate volume to at least one resin infusion tool and/or at least one resin molding tool.

In an example, the disclosed valve assembly for inline resin mixing includes an exterior valve body, an interior valve body and a cover. The exterior valve body includes three input ports and an output port and defines an interior cavity. The interior valve body is disposed within the interior cavity and defines five flow paths extending from a periphery of the interior valve body and intersecting at a central portion of the interior valve body. The cover is secured to the exterior valve body to enclose the interior valve body within the interior cavity.

The five flow paths of the interior valve body, the three input ports of the exterior valve body and the output port of the exterior valve body may be configured to establish four positions of the interior valve body in relation to the exterior valve body. Preferably, a first position of the interior valve body in relation to the exterior valve body is configured to connect a first input port through a first flow path and a second input port through a second flow path to the output port via a fifth flow path, optionally wherein the exterior valve body is configured to block a third flow path and to block a fourth flow path in the first position. Further preferably, a second position of the interior valve body in relation to the exterior valve body is configured to connect a third input port through a third flow path to the output port via a fourth flow path, optionally wherein the exterior valve body is configured to block a first flow path, a second flow path and a fifth flow path in the second position. Even further preferably, a third position of the interior valve body in relation to the exterior valve body is configured to connect a first input port through a second flow path to the output port via a first flow path, optionally wherein the exterior valve body is configured to block a third flow path, a fourth flow path and a fifth flow path in the third position. Even further preferably, a fourth position of the interior valve body in relation to the exterior valve body is configured to connect a second input port through a fifth flow path to the output port via a second flow path, optionally wherein the exterior valve body is configured to block a first flow path, a third flow path and a fourth flow path in the fourth position.

The three input ports of the exterior valve body may comprise a first input port, a second input port and a third input port, the first input port being 90 degrees counterclockwise of the output port, the second input port being 90 degrees counterclockwise of the first input port, the third input port being X degrees counterclockwise of the second input port, the output port being Y degrees counterclockwise of the third input port, wherein (X + Y) = 180 degrees and Y < 90 degrees.

The five flow paths of the interior valve body may comprise a first flow path, a second flow path, a third flow path, a fourth flow path and a fifth flow path, the first flow path being 90 degrees counterclockwise of the fifth flow path, the second flow path being 90 degrees counterclockwise of the first flow path, the third flow path being X degrees counterclockwise of the second flow path, the fourth flow path being Y degrees counterclockwise of the third flow path, the fifth flow path being X degrees counterclockwise of the fourth flow path, wherein (2X + Y) = 180 degrees.

The three input ports may comprise a first input port configured to connect to a first mixing component subsystem to receive a first mixing component, a second input port configured to connect to a second mixing component subsystem to receive a second mixing component and a third input port configured to connect to a solvent subsystem to receive a solvent, wherein the output port is configured to connect to an inline resin mixing subsystem. Preferably, the first mixing component comprises at least one of a thermoset resin, an epoxy resin, a polyester resin and a thermoplastic resin. Further preferably, the second mixing component comprises at least one of a thermoset hardener, an epoxy hardener, a polyester hardener, a hardener additive and a catalyst. Even further preferably, the solvent comprises at least one of an isopropyl alcohol-based solvent, a denatured alcohol-based solvent, an acetone-based solvent and a toluene-based solvent. Even further preferably, the five flow paths of the interior valve body, the three input ports of the exterior valve body and the output port of the exterior valve body are configured to establish four positions in which at least one flow path aligns with at least one input port and another flow path aligns with the output port in response to rotation of the interior valve body within the interior cavity of the exterior valve body. Optionally, a first position of the interior valve body is configured to route the first mixing component via a first input port through a first flow path and to route the second mixing component via a second input port through a second flow path to the output port via a fifth flow path to establish a flow of a mixed resin to the inline resin mixing subsystem, wherein preferably the interior valve body is configured to block a third input port in the first position. Optionally, a second position of the interior valve body is configured to route the solvent via a third input port through a third flow path to the output port via a fourth flow path to establish a flow of the solvent to the inline resin mixing subsystem, wherein preferably the interior valve body is configured to block a first input port and a second input port in the second position. Optionally, a third position of the interior valve body is configured to route the first mixing component via a first input port through a second flow path to the output port via a first flow path to establish a flow of the first mixing component to the inline resin mixing subsystem, wherein preferably the interior valve body is configured to block a second input port and a third input port in the third position. Optionally, a fourth position of the interior valve body is configured to route the second mixing component via a second input port through a fifth flow path to the output port via a second flow path to establish a flow of the second mixing component to the inline resin mixing subsystem, wherein preferably the interior valve body is configured to block a first input port and a third input port in the fourth position.

The valve assembly may further comprise a valve stem extending through an aperture of the cover and secured to the interior valve body, the valve stem configured to facilitate rotation of the interior valve body within the interior cavity of the exterior valve body. Preferably, the five flow paths of the interior valve body, the three input ports of the exterior valve body and the output port of the exterior valve body are configured to establish four positions in which at least one flow path aligns with at least one input port and another flow path aligns with the output port in response to rotation of the interior valve body to each position via the valve stem. The valve assembly may further comprise a rotary actuator coupled to the valve stem and configured to rotate the interior valve body from an initial position to a desired position in relation to the four positions; a position sensor configured to detect a current position of the interior valve body; and a valve control system in operative communication with the rotary actuator and the position sensor and configured to receive a position signal from the position sensor, to compare the position signal to the desired position and to send a control signal to the rotary actuator causing the rotary actuator to move to the desired position. Optionally, the rotary actuator comprises at least one of a servo motor, a stepper motor, a variable speed electric motor and a gear box. Optionally, the position sensor comprises at least one of a position encoder, a rotary potentiometer servo, a magnetic sensor and a gear box sensor.

In an example, the disclosed system for inline resin mixing comprises the above disclosed valve assembly comprising the exterior valve body, the interior valve body and the cover. The system further includes: a first mixing component subsystem coupled to a first input port of the exterior valve body and configured to provide a first flow of a first mixing component to the valve assembly; a second mixing component subsystem coupled to a second input port of the exterior valve body and configured to provide a second flow of a second mixing component to the valve assembly; a solvent subsystem coupled to a third input port of the exterior valve body and configured to provide a third flow of a solvent to the valve assembly; and an inline resin mixing subsystem coupled to the output port of the exterior valve body and configured to receive a fourth flow of a mixed resin from the valve assembly in conjunction with a first position of the valve assembly and configured to receive the third flow of the solvent in conjunction with a second position of the valve assembly.

The inline resin mixing subsystem may be configured to receive the first flow of the first mixing component in conjunction with a third position of the valve assembly.

The inline resin mixing subsystem may be configured to receive the second flow of the second mixing component in conjunction with a fourth position of the valve assembly.

Other examples of the disclosed methods, mixed resin retention assemblies, valve assemblies and systems for inline resin mixing will become apparent from the following detailed description, the accompanying drawings and the appended claims.

### BRIEF DESCRIPTION OF THE DRAWINGS

Fig. 1 is a flow diagram of an example of a method for inline resin mixing;
Fig. 2, in combination with Fig. 1, is a flow diagram of another example of a method for inline resin mixing;
Fig. 3, in combination with Fig. 1, is a flow diagram of yet another example of a method for inline resin mixing;
Fig. 4, in combination with Fig. 1, is a flow diagram of still another example of a method for inline resin mixing;
Fig. 5, in combination with Fig. 1, is a flow diagram of still yet another example of a method for inline resin mixing;
Fig. 6, in combination with Figs. 1 and 5, is a flow diagram of another example of a method for inline resin mixing;
Fig. 7, in combination with Fig. 1, is a flow diagram of yet another example of a method for inline resin mixing;
Fig. 8, in combination with Figs. 1 and 7, is a flow diagram of still another example of a method for inline resin mixing;
Fig. 9, in combination with Fig. 1, is a flow diagram of still yet another example of a method for inline resin mixing;
Fig. 10, in combination with Fig. 1, is a flow diagram of another example of a method for inline resin mixing;
Fig. 11, in combination with Fig. 1, is a flow diagram of yet another example of a method for inline resin mixing;
Fig. 12, in combination with Fig. 1, is a flow diagram of still another example of a method for inline resin mixing;
Figs. 13A and 13B provide functional block diagrams of an example of a mixed resin retention assembly for inline resin mixing;
Fig. 14 is a functional block diagram of another example of a mixed resin retention assembly for inline resin mixing;
Figs. 15A, 15B1 and 15B2 provide functional block diagrams of several examples of a mixed resin retention assembly for inline resin mixing;
Fig. 16 is a functional block diagram of yet another example of a mixed resin retention assembly for inline resin mixing;
Fig. 17 is a functional block diagram of still another example of a mixed resin retention assembly for inline resin mixing;
Fig. 18 is a functional block diagram of an example of a system for inline resin mixing;
Fig. 19 is a functional block diagram of another example of a system for inline resin mixing;
Fig. 20 provides top views of examples of elements of a valve assembly for inline resin mixing;
Fig. 21A is a top view of an example of a first position of an interior valve body of the valve assembly of Fig. 20 in relation to an exterior valve body with a cover removed;
Fig. 21B is a top view of an example of a second position of the interior valve body of the valve assembly of Fig. 20 in relation to the exterior valve body with the cover removed;
Fig. 21C is a top view of an example of a third position of the interior valve body of the valve assembly of Fig. 20 in relation to the exterior valve body with the cover removed;
Fig. 21D is a top view of an example of a fourth position of the interior valve body of the valve assembly of Fig. 20 in relation to the exterior valve body with the cover removed;
Fig. 22 is a top view of an example of an exterior valve body of the valve assembly of Fig. 20 with a cover and an interior valve body removed;
Fig. 23 is a top view of an example of an interior valve body of the valve assembly of Fig. 20 with a cover and an exterior valve body removed;
Fig. 24 is a functional block diagram of the valve assembly of Fig. 20 within an example of a system for inline resin mixing;
Fig. 25A is a functional diagram of an example of the first position of the interior valve body of Fig. 21A;
Fig. 25B is a functional diagram of an example of the second position of the interior valve body of Fig. 21B;
Fig. 25C is a functional diagram of an example of the third position of the interior valve body of Fig. 21C;
Fig. 25D is a functional diagram of an example of the fourth position of the interior valve body of Fig. 21D;
Fig. 26 is a functional block diagram of another example of a valve assembly for inline resin mixing;
Fig. 27 is a functional block diagram of an example of a system for inline resin mixing that implements the valve assembly of Fig. 20;
Fig. 28 is a block diagram of aircraft production and service methodology; and
Fig. 29 is a schematic illustration of an aircraft.

### DETAILED DESCRIPTION

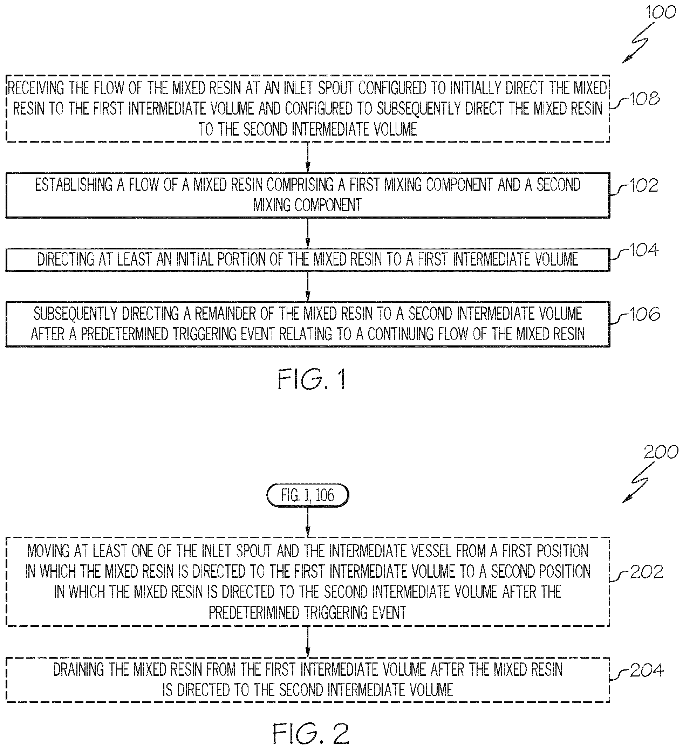

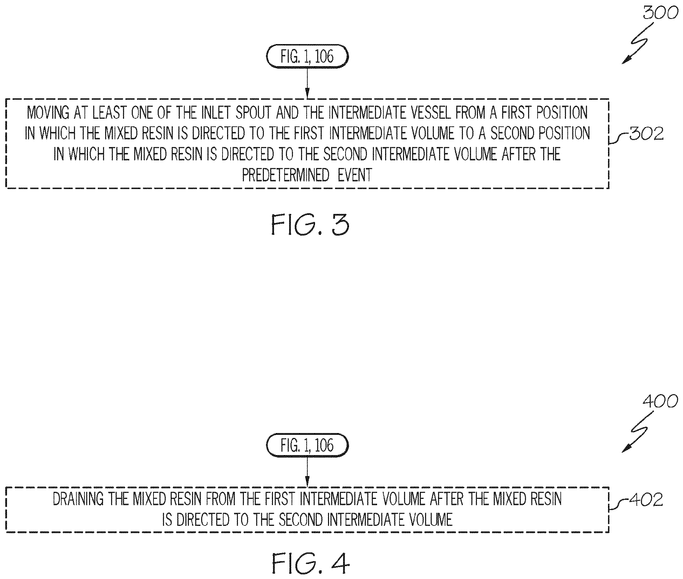

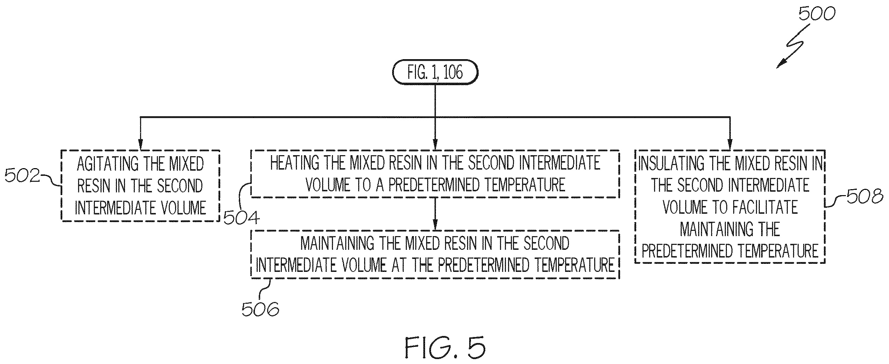

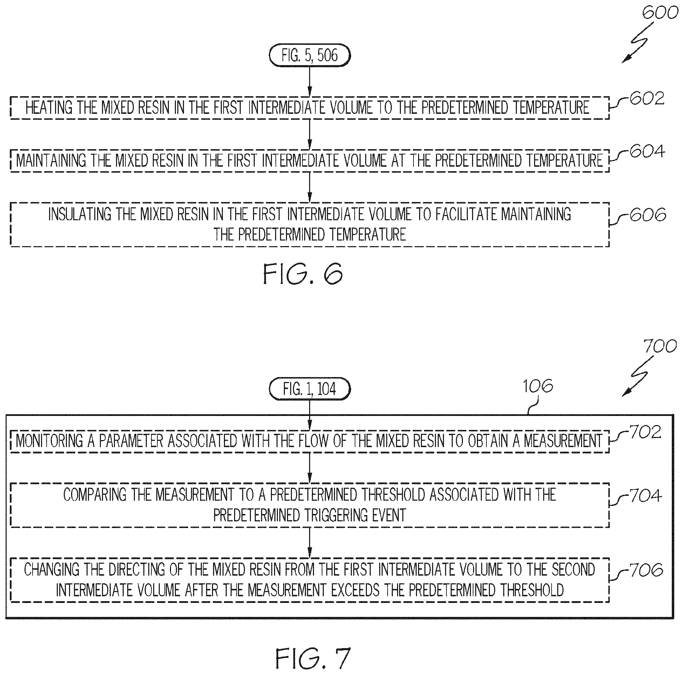

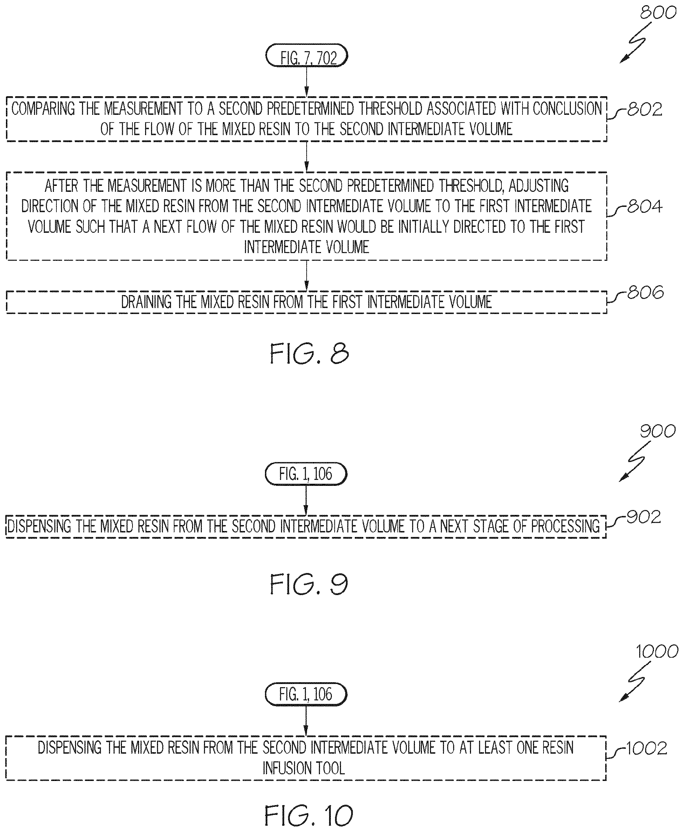

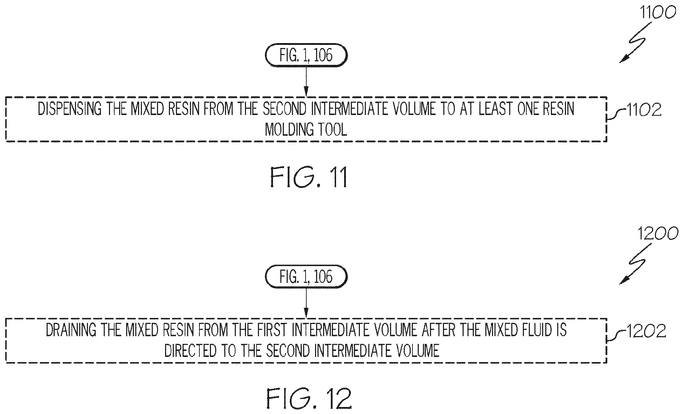

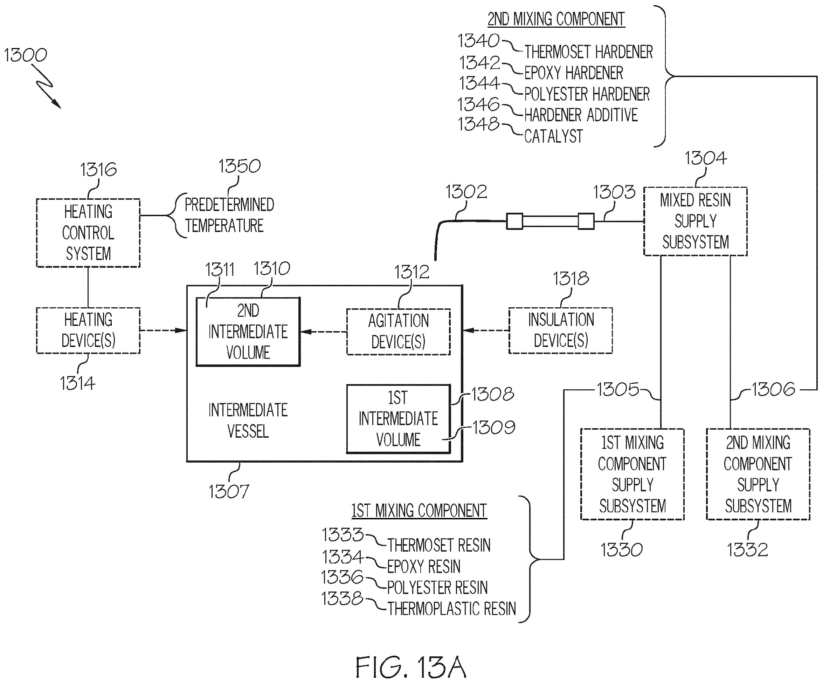

Referring generally to Figs. 1-12, 13A-B, 14, 15A, 15B1-2, 16 and 17, by way of examples, the present disclosure is directed to methods 100, 200, 300, 400, 500, 600, 700, 800, 900, 1000, 1100, 1200 for inline resin mixing. Fig. 1 discloses an example of the method 100. Figs. 1 and 2 disclose an example of the method 200. Figs. 1 and 3 disclose an example of the method 300. Figs. 1 and 4 disclose an example of the method 400. Figs. 1 and 5 disclose an example of the method 500. Figs. 1, 5 and 6 disclose an example of the method 600. Figs. 1 and 7 disclose an example of the method 700. Figs. 1, 7 and 8 disclose an example of the method 800. Figs. 1 and 9 disclose an example of the method 900. Figs. 1 and 10 disclose an example of the method 1000. Figs. 1 and 11 disclose an example of the method 1100. Figs. 1 and 12 disclose an example of the method 1200. Figs. 13A-B, 14, 15A, 15B1-2, 16 and 17 disclose various examples of a mixed resin retention assembly.

With reference again to Figs. 1 and 13A-B, 14, 15A and 15B1-2, in one or more examples, a method 100 for inline resin mixing includes establishing 102 a flow of a mixed resin 1303. The mixed resin 1303 includes a first mixing component 1305 and a second mixing component 1306. At 104, at least an initial portion 1309 of the mixed resin 1303 is directed to a first intermediate volume 1308. At 106, a remainder 1311 of the mixed resin 1303 is subsequently directing to a second intermediate volume 1310 after a predetermined triggering event 1402 relating to a continuing flow 1323 of the mixed resin 1303.

In another example of the method 100, the first mixing component 1305 includes a thermoset resin 1333, an epoxy resin 1334, a polyester resin 1336, a thermoplastic resin 1338 or any other suitable mixing component in any suitable combination. In yet another example of the method 100, the second mixing component 1306 includes a thermoset hardener 1340, an epoxy hardener 1342, a polyester hardener 1344, a hardener additive 1346, a catalyst 1348 or any other suitable mixing component in any suitable combination.

In still another example of the method 100, the predetermined triggering event 1402 indicates a ratio of the first mixing component 1305 to the second mixing component 1306 in the flow is within an acceptable tolerance 1404 of a predetermined threshold 1406. In a further example, prior to the predetermined triggering event 1402, the ratio of the first mixing component 1305 to the second mixing component 1306 in the flow is not within the acceptable tolerance 1404 of the predetermined threshold 1406 and unreliable 1408.

In still yet another example, the method 100 also includes receiving 108 the flow of the mixed resin 1303 at an inlet spout 1302 configured to initially direct 1410 the mixed resin 1303 to the first intermediate volume 1308 and configured to subsequently direct 1412 the mixed resin 1303 to the second intermediate volume 1310. In a further example, an intermediate vessel 1307 includes the first intermediate volume 1308 and the second intermediate volume 1310.

In an even further example, the intermediate vessel 1307 also includes a first base level 1502, a second base level 1504 above the first base level 1502, a connecting wall 1506 between an interior portion 1508 of the first base level 1502 and an interior portion 1508 of the second base level 1504 and an exterior wall 1510 extending from an exterior portion 1512 of the first base level 1502 and an exterior portion 1512 of the second base level 1504 to an opening 1514 to the intermediate vessel 1307. In other words, the interior portions 1508 are in relation to the intermediate vessel 1307 and along the connecting wall 1506 between the first base level 1502 and the second base level 1504. Conversely, the exterior portions 1512 are in relation to the intermediate vessel 1307 and along the exterior wall 1510 of the intermediate vessel 1307. The first intermediate volume 1308 defined from the first base level 1502 upward to the second base level 1504. The second intermediate volume 1310 defined from the second base level 1504 upward toward the opening 1514. For example, the second intermediate volume 1310 can be in an inverted dome shape, an inverted conical shape, an open cylindrical shape, an open cubical shape or any other suitable volumetric shape.

In an even yet further example, the intermediate vessel 1307 also includes an outlet 1516 disposed along the exterior wall 1510 for dispensing mixed resin 1303 from the second intermediate volume 1310. The outlet 1516 disposed above the first intermediate volume 1308 such that the mixed resin 1303 in the first intermediate volume 1308 is not dispensed through the outlet 1516 when the mixed resin 1303 is dispensed from the second intermediate volume 1310.

With reference again to Figs. 1, 2, 13A-B, 14, 15A, 15B1-2 and 16, in one or more examples, a method 200 for inline resin mixing includes the method 100 of Fig. 1 and continues from 106 to 202 where at least one of the inlet spout 1302 and the intermediate vessel 1307 is moved from a first position 1520 in which the mixed resin 1303 is directed to the first intermediate volume 1308 to a second position 1522 in which the mixed resin 1303 is directed to the second intermediate volume 1310 after the predetermined triggering event 1402.

In another example of the method 200, the inlet spout 1302 is configured to expand/extend 1414 from the first position 1520 to the second position 1522 in response to the predetermined triggering event 1402. In a further example, the inlet spout 1302 is configured to compress/retract 1416 from the second position 1522 to the first position 1520 after conclusion of the continuing flow 1323 of the mixed resin 1303 to the second intermediate volume 1310. For example, the compress/retract 1416 action may include a telescoping feature.

In yet another example of the method 200, the inlet spout 1302 is configured to swivel 1418 from the first position 1520 to the second position 1522 in response to the predetermined triggering event 1402.

In still another example of the method 200, the intermediate vessel 1307 is configured to move 1524 from the first position 1520 to the second position 1522 in response to the predetermined triggering event 1402.

In still yet another example of the method 200, the intermediate vessel 1307 also includes a partitioning wall 1604 extending from the first base level 1502 toward the opening 1514 of the intermediate vessel 1307 to physically isolate 1606 the first intermediate volume 1308 from the second intermediate volume 1310. In a further example, the method 200 also includes draining 204 the mixed resin 1303 from the first intermediate volume 1308 after the mixed resin 1303 is directed to the second intermediate volume 1310.

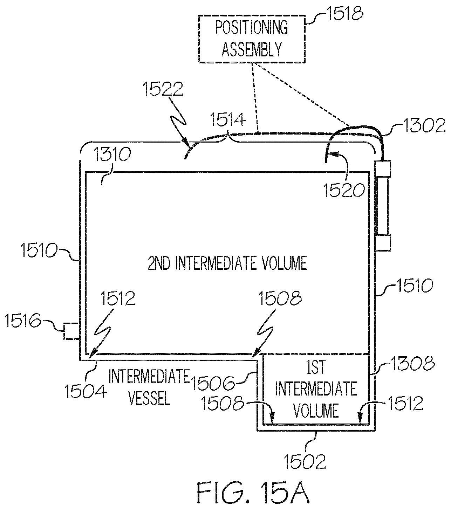

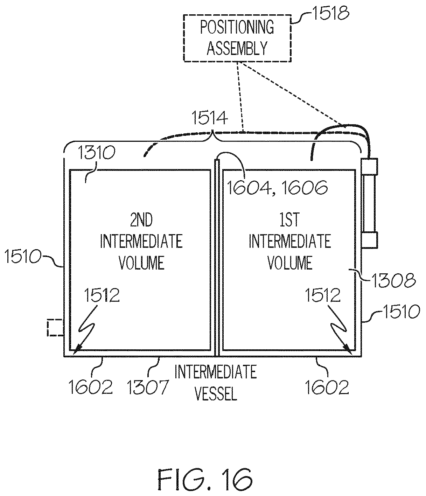

With reference again to Figs. 1 and 13A-B, 14, 15A, 15B1-2 and 16, in another example of the method 100, the intermediate vessel 1307 also includes a base level 1602 (see Fig. 16) and an exterior wall 1510 extending from an exterior portion 1512 of the base level 1602 to an opening 1514 to the intermediate vessel 1307. In this example, the intermediate vessel 1307 does not include the first and second base levels 1502, 1504 shown in Fig. 15A. In a further example, the intermediate vessel 1307 also includes a partitioning wall 1604 extending from the base level 1602 toward the opening 1514 of the intermediate vessel 1307 to physically isolate 1606 the first intermediate volume 1308 from the second intermediate volume 1310.

With reference again to Figs. 1, 3, 13A-B, 14, 15A and 15B1-2, in one or more examples, a method 300 for inline resin mixing includes the method 100 of Fig. 1 and continues from 106 to 302 where at least one of the inlet spout 1302 and the intermediate vessel 1307 is moved 1524 from a first position 1520 in which the mixed resin 1303 is directed to the first intermediate volume 1308 to a second position 1522 in which the mixed resin 1303 is directed to the second intermediate volume 1310 after the predetermined triggering event 1402.

In another example of method 300, the inlet spout 1302 is configured to expand/extend 1414 from the first position 1520 to the second position 1522 in response to the predetermined triggering event 1402. In a further example, the inlet spout 1302 is configured to compress/retract 1416 from the second position 1522 to the first position 1520 after conclusion of the continuing flow 1323 of the mixed resin 1303 to the second intermediate volume 1310. For example, the compress/retract 1416 action may include a telescoping feature.

In yet another example of method 300, the inlet spout 1302 is configured to swivel 1418 from the first position 1520 to the second position 1522 in response to the predetermined triggering event 1402.

In still another example of method 300, the intermediate vessel 1307 is configured to move 1524 from the first position 1520 to the second position 1522 in response to the predetermined triggering event 1402.

With reference again to Figs. 1, 4 and 13A-B, in one or more examples, a method 400 for inline resin mixing includes the method 100 of Fig. 1 and continues from 106 to 402 where the mixed resin 1303 is drained from the first intermediate volume 1308 after the mixed resin 1303 is directed to the second intermediate volume 1310.

With reference again to Figs. 1 and 13A-B, 14, 15A, 15B1-2 and 16, in another example of the method 100, the intermediate vessel 1307 also includes an outlet 1516 disposed along the exterior wall 1510 for dispensing mixed resin 1303 from the second intermediate volume 1310. The outlet 1516 is disposed above the first intermediate volume (1308) such that the mixed resin 1303 in the first intermediate volume 1308 is not dispensed through the outlet 1516 when the mixed resin 1303 is dispensed from the second intermediate volume 1310. The first intermediate volume 1308 being defined from the base level 1602 (see Fig. 16) upward to the outlet 1516. In this example, the intermediate vessel 1307 does not include the first and second base levels 1502, 1504 shown in Fig. 15A. The second intermediate volume 1310 being defined from the first intermediate volume 1308 upward toward the opening 1514.

With reference again to Figs. 1, 5 and 13A-B, in one or more examples, a method 500 for inline resin mixing includes the method 100 of Fig. 1 and continues from 106 to 502, 504 and 508. At 502, the mixed resin 1303 in the second intermediate volume 1310 is agitated. At 504, the mixed resin 1303 in the second intermediate volume 1310 is heated to a predetermined temperature 1350. At 506, the mixed resin 1303 in the second intermediate volume 1310 is maintained at the predetermined temperature 1350. At 508, the mixed resin 1303 in the second intermediate volume 1310 is insulated to facilitate maintaining the predetermined temperature 1350.

In another example of the method 500, at least one agitation device 1312 is disposed such that the agitating of the mixed resin 1303 in the second intermediate volume 1310 does not agitate the mixed resin 1303 in the first intermediate volume 1308.

In yet another example of the method 500, the first intermediate volume 1308 and the second intermediate volume 1310 are physically isolated 1606 such agitation of the mixed resin 1303 in the second intermediate volume 1310 does not agitate the mixed resin 1303 in the first intermediate volume 1308.

With reference again to Figs. 1, 5, 6 and 13A-B, in one or more examples, a method 600 for inline resin mixing includes the methods 100, 500 of Figs. 1 and 5 and continues from 506 to 602 where the mixed resin 1303 in the first intermediate volume 1308 is heated to the predetermined temperature 1350. At 604, the mixed resin 1303 in the first intermediate volume 1308 is maintained at the predetermined temperature 1350. At 606, the mixed resin 1303 in the first intermediate volume 1308 is insulated to facilitate maintaining the predetermined temperature 1350.

With reference again to Figs. 1, 7, 13A-B and 14, in one or more examples, a method 700 for inline resin mixing includes the method 100 of Fig. 1 and continues from 104 to 702 where a parameter associated with the flow of the mixed resin 1303 is monitored to obtain a measurement 1420. At 704, the measurement 1420 is compared to a predetermined threshold 1406 associated with the predetermined triggering event 1402. At 706, the directing of the mixed resin 1303 is changed from the first intermediate volume 1308 to the second intermediate volume 1310 after the measurement 1420 exceeds the predetermined threshold 1406.

In another example of the method 700, the measurement 1420 includes a flow time measurement 1422, a mixed resin viscosity measurement 1424, a mixed resin flow measurement 1426, a mixed resin volume measurement 1428, a mixed resin weight measurement 1430, a mixed resin concentration measurement 1432 or any other suitable measurement in any suitable combination.

In a further example, the flow time measurement 1422 is based on an elapsed time measurement 1434 from a start 1352 of the continuing flow 1323 of the mixed resin 1303. In an even further example, the predetermined threshold 1406 for the elapsed time measurement 1434 is about 30 seconds from the start 1352 of the continuing flow 1323 of the mixed resin 1303.

In another further example, the mixed resin viscosity measurement 1424 is based on measurements 1420 of a dynamic mixed resin pressure 1354 and a mixed resin temperature 1356 by a viscometer 1358.

In yet another further example, the mixed resin flow measurement 1426 is based on measurements 1420 by ultrasonic sensors 1360.

In still yet another further example, the mixed resin volume measurement 1428 is based on a fluid level measurement 1436 for the first intermediate volume 1308. In an even further example, the predetermined threshold 1406 for the fluid level measurement 1436 is indicative of about 0.431 liters of mixed resin 1303 in the first intermediate volume 1308.

In another further example, the mixed resin weight measurement 1430 is based on a mixed resin weight measurement 1430 for the first intermediate volume 1308. In an even further example, the predetermined threshold 1406 for the mixed resin weight measurement 1430 is indicative of about 0.5 kilograms of mixed resin 1303 for the first intermediate volume 1308.

In yet another further example, the mixed resin concentration measurement 1432 is based on a concentration measurement 1432 by a refractometer 1362. In an even further example, the predetermined threshold 1406 for the concentration measurement 1432 is indicative of about two-thirds concentration 1364 of the first mixing component 1305 and about one-third concentration 1366 of the second mixing component 1306, about one-half concentration of the first mixing component 1305 and about one-half concentration of the second mixing component 1306 or any other suitable concentration of any mixing component in any suitable combination.

With reference again to Figs. 1, 7, 8 and 13A-B, in one or more examples, a method 800 for inline resin mixing includes the methods 100, 700 of Figs. 1 and 7 and continues from 702 to 802 where the measurement 1420 is compared to a second predetermined threshold 1438 associated with conclusion of the continuing flow 1323 of the mixed resin 1303 to the second intermediate volume 1310. At 804, after the measurement 1420 is more than the second predetermined threshold 1438, direction of the mixed resin 1303 is adjusted from the second intermediate volume 1310 to the first intermediate volume 1308 such that a next flow 1368 of the mixed resin 1303 would be initially directed 1410 to the first intermediate volume 1308. At 806, the mixed resin 1303 is drained from the first intermediate volume 1308.

In another example of the method 800, the measurement 1420 includes a mixed resin viscosity measurement 1424, a mixed resin flow measurement 1426, a mixed resin concentration measurement 1432 or any other suitable measurement in any suitable combination.

With reference again to Figs. 1, 9 and 13A-B, in one or more examples, a method 900 for inline resin mixing includes the method 100 of Fig. 1 and continues from 106 to 902 where the mixed resin 1303 is dispensed from the second intermediate volume 1310 to a next stage of processing. In another example of the method 900, the next stage of processing includes at least one resin infusion tool 1324, at least one resin molding tool 1328, at least one compression molding tool or any other suitable composite manufacturing tool in any suitable combination.

With reference again to Figs. 1, 10, 13A-B, 15A and 15B1-2, in one or more examples, a method 1000 for inline resin mixing includes the method 100 of Fig. 1 and continues from 106 to 1002 where the mixed resin 1303 is dispensed from the second intermediate volume 1310 to at least one resin infusion tool 1324. In another example of the method 1000, the dispensing includes pumping the mixed resin 1303 from the second intermediate volume 1310 to the at least one resin infusion tool 1324. In yet another example of the method 1000, an outlet 1516 for the dispensing of the mixed resin 1303 from the second intermediate volume 1310 is disposed such that the mixed resin 1303 in the first intermediate volume 1308 is not dispensed through said outlet 1516. In still another example of the method 1000, the first intermediate volume 1308 and the second intermediate volume 1310 are physically isolated 1606 such that mixed resin 1303 is not dispensed from the first intermediate volume 1308.

With reference again to Figs. 1, 11, 13A-B, 15A and 15B1-2, in one or more examples, a method 1100 for inline resin mixing includes the method 100 of Fig. 1 and continues from 106 to 1102 where the mixed resin 1303 is dispensed from the second intermediate volume 1310 to at least one resin molding tool 1328. In another example of the method 1100, the dispensing includes pumping the mixed resin 1303 from the second intermediate volume 1310 to the at least one resin molding tool 1328. In yet another example of the method 1100, an outlet 1516 for the dispensing of the mixed resin 1303 from the second intermediate volume 1310 is disposed such that mixed resin 1303 from the first intermediate volume 1308 is not dispensed through said outlet 1516. In still another example of the method 1100, the first intermediate volume 1308 and the second intermediate volume 1310 are physically isolated 1606 such that mixed resin 1303 is not dispensed from the first intermediate volume 1308.

With reference again to Figs. 1, 12 and 13A-B, in one or more examples, a method 1200 for inline resin mixing includes the method 100 of Fig. 1 and continues from 106 to 1202 where the mixed resin 1303 is drained from the first intermediate volume 1308 after the mixed resin 1303 is directed to the second intermediate volume 1310.

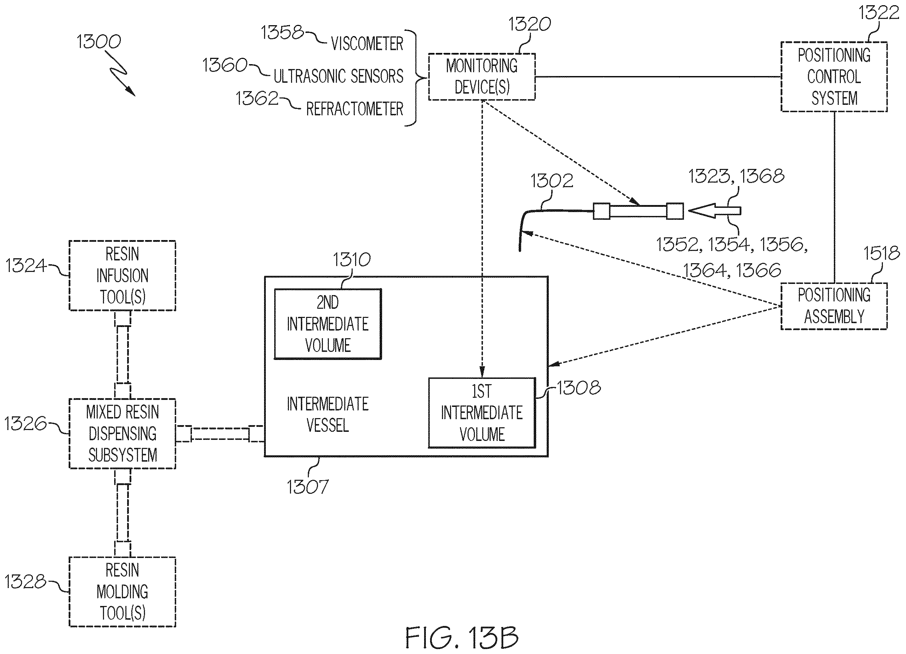

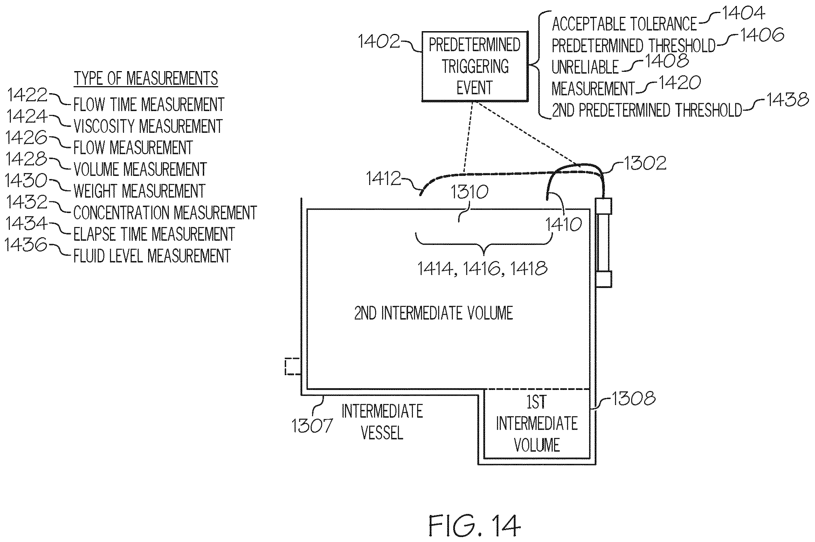

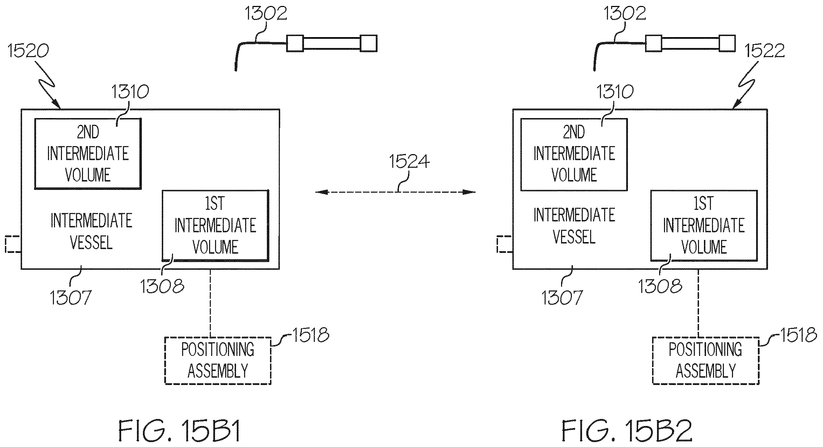

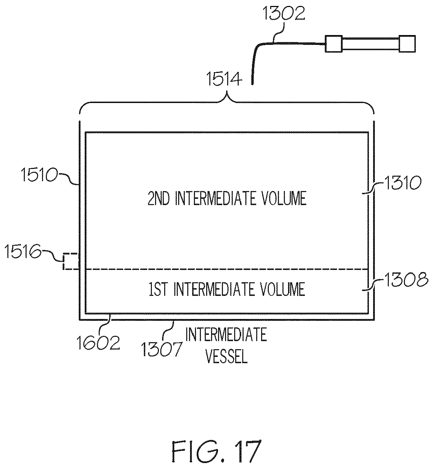

Referring generally to Fig. 13A-B, 14, 15A, 15B1-2, 16 and 17, by way of examples, the present disclosure is directed to a mixed resin retention assembly 1300 for inline resin mixing. Figs. 13A and 13B disclose an example of the mixed resin retention assembly 1300 that includes an inlet spout 1302 and an intermediate vessel 1307. Fig. 14 discloses an example of the mixed resin retention assembly 1300 in relation to a predetermined triggering event 1402. Figs. 15A, 15B1 and 15B2 disclose examples of the mixed resin retention assembly 1300 in relation to a positioning assembly 1518. Fig. 16 discloses an example of the mixed resin retention assembly 1300 in relation to the positioning assembly 1518. Fig. 17 discloses another example of the mixed resin retention assembly 1300.

With reference again to Figs. 13A-B and 14, in one or more examples, a mixed resin retention assembly 1300 for inline resin mixing includes an inlet spout 1302 and an intermediate vessel 1307. The intermediate vessel 1307 includes a first intermediate volume 1308 and a second intermediate volume 1310. The inlet spout 1302 is configured to receive a flow of a mixed resin 1303 from a mixed resin supply subsystem 1304. The mixed resin 1303 includes a first mixing component 1305 and a second mixing component 1306. The mixed resin supply subsystem 1304 may receive the first mixing component 1305 from a first mixing component supply subsystem 1330. The mixed resin supply subsystem 1304 may receive the second mixing component 1305 from a second mixing component supply subsystem 1332. The first intermediate volume 1308 configured to hold at least an initial portion 1309 of the mixed resin 1303. The second intermediate volume 1310 configured to hold a remainder 1311 of the mixed resin 1303. The inlet spout 1302 and the intermediate vessel 1307 are configured such that the mixed resin 1303 is initially directed 1410 to the first intermediate volume 1308 and subsequently directed 1412 to the second intermediate volume 1310 in response to a predetermined triggering event 1402 related to a continuing flow 1323 of the mixed resin 1303.

In another example of the mixed resin retention assembly 1300, the first mixing component 1305 includes a thermoset resin 1333, an epoxy resin 1334, a polyester resin 1336, , a thermoplastic resin 1338 any other suitable mixing component in any suitable combination.

In yet another example of the mixed resin retention assembly 1300, the second mixing component 1306 includes a thermoset hardener 1340, an epoxy hardener 1342, a polyester hardener 1344, a hardener additive 1346, a catalyst 1348 or any other suitable mixing component in any suitable combination.

In still another example of the mixed resin retention assembly 1300, the predetermined triggering event 1402 indicates a ratio of the first mixing component 1305 to the second mixing component 1306 in the flow is within an acceptable tolerance 1404 of a predetermined threshold 1406. In a further example, prior to the predetermined triggering event 1402, the ratio of the first mixing component 1305 to the second mixing component 1306 in the flow is not within the acceptable tolerance 1404 of the predetermined threshold 1406 and unreliable 1408.

With reference again to Figs. 13A-B, 14 and 15A, 15B1-2, in one or more examples of the mixed resin retention assembly 1300, the intermediate vessel 1307 includes a first base level 1502, a second base level 1504, a connecting wall 1506, an exterior wall 1510 and an opening 1514. The second base level 1504 being above the first base level 1502. The connecting wall 1506 is between an interior portion 1508 of the first base level 1502 and an interior portion 1508 of the second base level 1504. The exterior wall 1510 extends from an exterior portion 1512 of the first base level 1502 and an exterior portion 1512 of the second base level 1504 to an opening 1514 to the intermediate vessel 1307. In other words, the interior portions 1508 are in relation to the intermediate vessel 1307 and along the connecting wall 1506 between the first base level 1502 and the second base level 1504. Conversely, the exterior portions 1512 are in relation to the intermediate vessel 1307 and along the exterior wall 1510 of the intermediate vessel 1307. The first intermediate volume 1308 defined from the first base level 1502 upward to the second base level 1504. The second intermediate volume 1310 defined from the second base level 1504 upward toward the opening 1514.

In another example of the mixed resin retention assembly 1300, the intermediate vessel 1307 also includes an outlet 1516 disposed along the exterior wall 1510 for dispensing the mixed resin 1303 from the second intermediate volume 1310. The outlet 1516 disposed above the first intermediate volume 1308 such that the mixed resin 1303 in the first intermediate volume 1308 is not dispensed through the outlet 1516 when the mixed resin 1303 is dispensed from the second intermediate volume 1310.

In yet another example, the mixed resin retention assembly 1300 also includes a positioning assembly 1518 configured to move at least one of the inlet spout 1302 and the intermediate vessel 1307 from a first position 1520 in which the mixed resin 1303 is directed to the first intermediate volume 1308 and a second position 1522 in which the mixed resin 1303 is directed to the second intermediate volume 1310 after the predetermined triggering event 1402. In a further example, the positioning assembly 1518 is configured to expand/extend 1414 the inlet spout 1302 from the first position 1520 to the second position 1522 in response to the predetermined triggering event 1402. In an even further example, the positioning assembly 1518 is configured to compress/retract 1416 the inlet spout 1302 from the second position 1522 to the first position 1520 after conclusion of the continuing flow 1323 of the mixed resin 1303 to the second intermediate volume 1310. For example, the compress/retract 1416 action may include a telescoping feature. In another further example, the positioning assembly 1518 is configured to swivel 1418 the inlet spout 1302 from the first position 1520 to the second position 1522 in response to the predetermined triggering event 1402. In yet another further example, the positioning assembly 1518 is configured to move 1524 the intermediate vessel 1307 from the first position 1520 to the second position 1522 in response to the predetermined triggering event 1402.

With reference again to Figs. 13A-B, 14, 15A, 15B1-2 and 16, in one or more examples of the mixed resin retention assembly 1300, the intermediate vessel 1307 also includes a base level 1602 (see Fig. 16) and an exterior wall 1510 extending from an exterior portion 1512 of the base level 1602 to an opening 1514 to the intermediate vessel 1307. In this example, the intermediate vessel 1307 does not include the first and second base levels 1502, 1504 shown in Fig. 15A.

In another example of the mixed resin retention assembly 1300, the intermediate vessel 1307 also includes a partitioning wall 1604 extending from the base level 1602 toward the opening 1514 of the intermediate vessel 1307 to physically isolate 1606 the first intermediate volume 1308 from the second intermediate volume 1310.

In yet another example, the mixed resin retention assembly 1300 also includes a positioning assembly 1518 configured to move at least one of the inlet spout 1302 and the intermediate vessel 1307 from a first position 1520, in which the mixed resin 1303 is directed to the first intermediate volume 1308, to a second position 1522, in which the mixed resin 1303 is directed to the second intermediate volume 1310 after the predetermined triggering event 1402. In a further example, the positioning assembly 1518 is configured to expand/extend 1414 the inlet spout 1302 from the first position 1520 to the second position 1522 in response to the predetermined triggering event 1402. In an even further example, the positioning assembly 1518 is configured to compress/retract 1416 the inlet spout 1302 from the second position 1522 to the first position 1520 after conclusion of the continuing flow 1323 of the mixed resin 1303 to the second intermediate volume 1310. For example, the compress/retract 1416 action may include a telescoping feature. In another further example, the positioning assembly 1518 is configured to swivel 1418 the inlet spout 1302 from the first position 1520 to the second position 1522 in response to the predetermined triggering event 1402. In yet another further example, the positioning assembly 1518 is configured to move 1524 the intermediate vessel 1307 from the first position 1520 to the second position 1522 in response to the predetermined triggering event 1402.

In still another example of the mixed resin retention assembly 1300, the intermediate vessel 1307 also includes an outlet 1516 disposed along the exterior wall 1510 for dispensing mixed resin 1303 from the second intermediate volume 1310. The outlet 1516 disposed above the first intermediate volume 1308 such that the mixed resin 1303 in the first intermediate volume 1308 is not dispensed through the outlet 1516 when the mixed resin 1303 is dispensed from the second intermediate volume 1310. The first intermediate volume 1308 defined from the base level 1602 upward to the outlet 1516. The second intermediate volume 1310 is defined from the first intermediate volume 1308 upward toward the opening 1514.

With reference again to Figs. 13A-B, in one or more examples of the mixed resin retention assembly 1300, the intermediate vessel 1307 also includes at least one agitation device 1312, at least one heating device 1314, a heating control system 1316 and at least one insulating device 1318. The at least one agitation device 1312 configured to agitate the mixed resin 1303 in the second intermediate volume 1310. The at least one heating device 1314 configured to heat the mixed resin 1303 in the second intermediate volume 1310 to a predetermined temperature 1350. The heating control system 1316 configured to control the at least one heating device 1314 and configured to maintain the mixed resin 1303 in the second intermediate volume 1310 at the predetermined temperature 1350. The at least one insulating device 1318 configured to insulate the mixed resin 1303 in the second intermediate volume 1310 to facilitate maintaining the predetermined temperature 1350.

In another example of the mixed resin retention assembly 1300, the at least one agitation device 1312 is disposed such that agitation of the mixed resin 1303 in the second intermediate volume 1310 does not agitate the mixed resin 1303 in the first intermediate volume 1308. In yet another example of the mixed resin retention assembly 1300, the at least one heating device 1314 is configured to heat the mixed resin 1303 in the first intermediate volume 1308 to the predetermined temperature 1350. In this example, the heating control system 1316 is configured to maintain the mixed resin 1303 in the first intermediate volume 1308 at the predetermined temperature 1350.

With reference again to Figs. 13A-B, 14, 15A and 15B1-2, in one or more examples, the mixed resin retention assembly 1300 also includes at least one monitoring device 1320, a positioning control system 1322 and a positioning assembly 1518. The at least one monitoring device 1320 configured to detect at least one parameter associated with the flow of the mixed resin 1303 to obtain at least one measurement 1420. The positioning control system 1322 in operative communication with the at least one monitoring device 1320 to receive the at least one measurement 1420. The positioning control system 1322 is configured to compare the at least one measurement 1420 to a corresponding at least one predetermined threshold 1406 associated with the predetermined triggering event 1402. The positioning assembly 1518 configured to move the inlet spout 1302 and the intermediate vessel 1307 from a first position 1520 in which the mixed resin 1303 is directed to the first intermediate volume 1308 and a second position 1522 in which the mixed resin 1303 is directed to the second intermediate volume 1310 after the predetermined triggering event 1402. The positioning control system 1322 is in operative communication with the positioning assembly 1518. The positioning control system 1322 configured to control movement of the positioning assembly 1518 between the first position 1520 and the second position 1522 in response to the predetermined triggering event 1402.

In another example of the mixed resin retention assembly 1300, the at least one measurement 1420 includes a flow time measurement 1422, a mixed resin viscosity measurement 1424, a mixed resin flow measurement 1426, a mixed resin volume measurement 1428, a mixed resin weight measurement 1430, a mixed resin concentration measurement 1432 or any other suitable measurement in any suitable combination. In yet another example of the mixed resin retention assembly 1300, the at least one monitoring device 1320 includes a timer configured to monitor elapsed time from a start 1352 of the continuing flow 1323 of the mixed resin 1303, a viscometer 1358 configured to monitor a dynamic mixed resin pressure 1354 and a mixed resin temperature 1356 associated with the flow of the mixed resin 1303, ultrasonic sensors 1360 configured to measure the flow of the mixed resin 1303, a fluid sensor configured to detect a fluid level that indicates the first intermediate volume 1308 is full, a scale configured to detect a weight that indicates the first intermediate volume 1308 is full, a refractometer 1362 configured to monitor a concentration of the flow of mixed resin 1303.

With reference again to Figs. 13A-B, 15A and 15B1-2, in one or more examples, the mixed resin retention assembly 1300 also includes an outlet 1516 configured to dispense the mixed resin 1303 from the second intermediate volume 1310 to at least one resin infusion tool 1324. In another example of the mixed resin retention assembly 1300, the outlet 1516 is configured to interface with a mixed resin dispensing subsystem 1326. The mixed resin dispensing subsystem 1326 configured to pump the mixed resin 1303 from the second intermediate volume 1310 to the at least one resin infusion tool 1324. In yet another example of the mixed resin retention assembly 1300, the outlet 1516 is disposed such that the mixed resin in the first intermediate volume 1308 is not dispensed through said outlet 1516. In still another example of the mixed resin retention assembly 1300, the first intermediate volume 1308 and the second intermediate volume 1310 are physically isolated 1606 such that the outlet 1516 is not in fluidic communication with the first intermediate volume 1308.

With reference again to Figs. 13A-B, 15A and 15B1-2, in one or more examples, the mixed resin retention assembly 1300 also includes an outlet 1516 configured to dispense the mixed resin 1303 from the second intermediate volume 1310 to at least one resin molding tool 1328. In another example of the mixed resin retention assembly 1300, the outlet 1516 is configured to interface with a mixed resin dispensing subsystem 1326. The mixed resin dispensing subsystem 1326 is configured to pump the mixed resin 1303 from the second intermediate volume 1310 to the at least one resin molding tool 1328. In yet another example of the mixed resin retention assembly 1300, the outlet 1516 is disposed such that mixed resin 1303 from the first intermediate volume 1308 is not dispensed through said outlet 1516. In still another example of the mixed resin retention assembly 1300, the first intermediate volume 1308 and the second intermediate volume 1310 are physically isolated 1606 such that the outlet 1516 is not in fluidic communication with the first intermediate volume 1308.

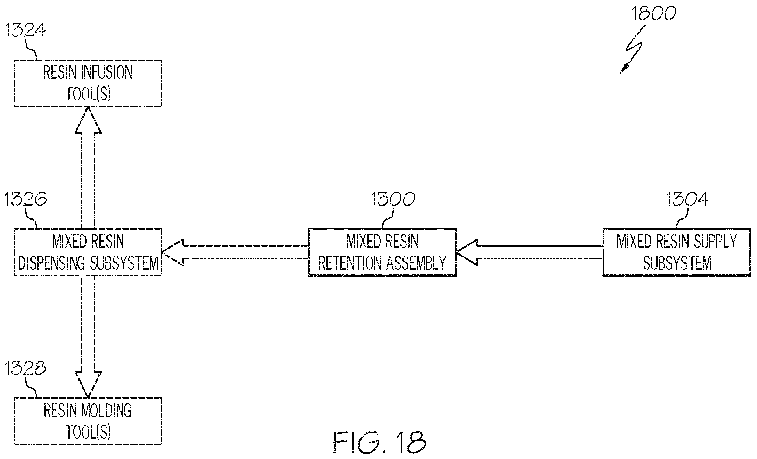

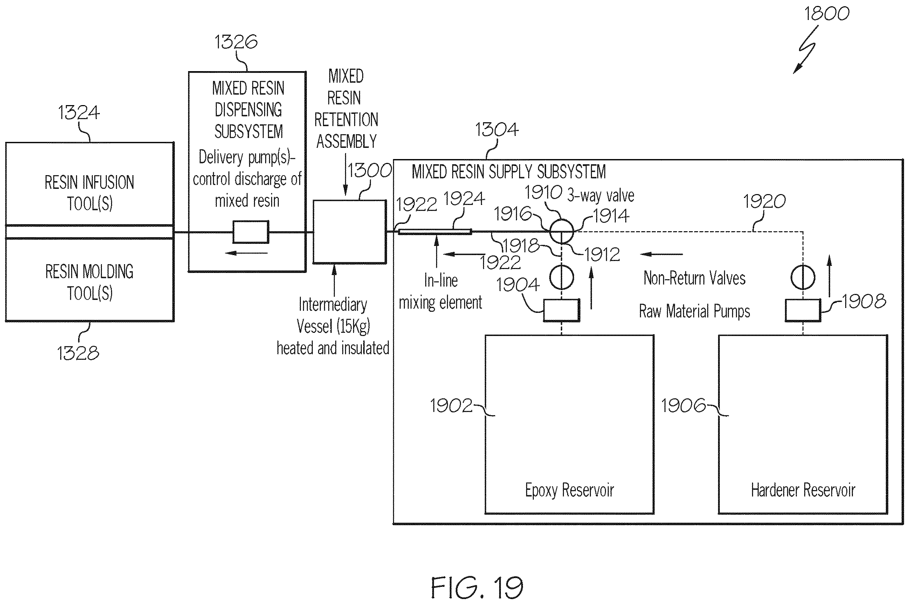

Referring generally to Figs. 13A-B, 14, 15A, 15B1-2 and 16-19, by way of examples, the present disclosure is directed to a system 1800 for inline resin mixing. Fig. 18 discloses an example of the system 1800 that includes a mixed resin supply subsystem 1304 and a mixed resin retention assembly 1300. Fig. 19 discloses an example the system 1800 that includes a mixed resin supply subsystem 1304, a mixed resin retention assembly 1300 and mixed resin dispensing subsystem 1326.

With reference again to Figs. 13A-B, 14, 15A, 15B1-2 and 16-19, in one or more examples, a system 1800 for inline resin mixing includes a mixed resin supply subsystem 1304 and a mixed resin retention assembly 1300. The mixed resin supply subsystem 1304 includes a first reservoir 1902, a first pump 1904, a second reservoir 1906, a second pump 1908, a three-way valve 1910, a plurality of first supply lines 1918, a plurality of second supply lines 1920 and at least one mixed resin supply line 1922. The mixed resin retention assembly 1300 includes an inlet spout 1302 and an intermediate vessel 1307.

Regarding the mixed resin supply subsystem 1304, the first reservoir 1902 configured to hold a volume of a first mixing component 1305. The first pump 1904 configured to draw the first mixing component 1305 from the first reservoir 1902. The second reservoir 1906 configured to hold a volume of a second mixing component 1306. The second pump 1908 configured to draw the second mixing component 1306 from the second reservoir 1906. The three-way valve 1910 includes a first inlet connection 1912, a second inlet connection 1914 and an outlet connection 1916. The three-way valve 1910 configured to receive the first mixing component 1305 from the first pump 1904 at the first inlet connection 1912. The three-way valve 1910 configured to receive the second mixing component 1306 from the second pump 1908 at the second inlet connection 1914. The three-way valve 1910 configured to establish a flow of a mixed resin 1303 via the outlet connection 1916 in conjunction with the first and second pumps 1904, 1908 drawing the first and second mixing components 1305, 1306 from the first and second reservoirs 1902, 1904. The plurality of first supply lines 1918 interconnecting the first reservoir 1902, the first pump 1904 and the first inlet connection 1912 of the three-way valve 1910. The plurality of second supply lines 1920 interconnecting the second reservoir 1906, the second pump 1908 and the second inlet connection 1914 of the three-way valve 1910. The at least one mixed resin supply line 1922 connected to the outlet connection 1916 of the three-way valve 1910.

Regarding the mixed resin retention assembly 1300, the inlet spout 1302 is connected to the at least one mixed resin supply line 1922. The inlet spout 1302 configured to receive the flow of the mixed resin 1303 via the at least one mixed resin supply line 1922. The intermediate vessel 1307 includes a first intermediate volume 1308 and a second intermediate volume 1310. The first intermediate volume 1308 configured to hold at least an initial portion 1309 of the mixed resin 1303. The second intermediate volume 1310 configured to hold a remainder 1311 of the mixed resin 1303.

In another example of the system 1800, the first pump 1904 includes a first gear pump and the second pump 1908 includes a second gear pump.

In yet another example of the system 1800, the mixed resin supply subsystem 1304 also includes an inline mixing element 1924 between the three-way valve 1910 and the inlet spout 1302 of the mixed resin retention assembly 1300. In this example, the at least one mixed resin supply line 1922 includes a plurality of mixed resin supply lines 1922 interconnecting the three-way valve 1910, the inline mixing element 1924, and the inlet spout 1302.

In still another example of the system 1800, the mixed resin retention assembly 1300 also includes at least one agitation device 1312, at least one heating device 1314, a heating control system 1316 and at least one insulating device 1318. The at least one agitation device 1312 configured to agitate the mixed resin 1303 in the second intermediate volume 1310. The at least one heating device 1314 configured to heat the mixed resin 1303 in the second intermediate volume 1310 to a predetermined temperature 1350. The heating control system 1316 configured to control the at least one heating device 1314 and configured to maintain the mixed resin 1303 in the second intermediate volume 1310 at the predetermined temperature 1350. The at least one insulating device 1318 configured to insulate the mixed resin 1303 in the second intermediate volume 1310 to facilitate maintaining the predetermined temperature 1350. In a further example of the system 1800, the at least one heating device 1314 is configured to heat the mixed resin 1303 in the first intermediate volume 1308 to the predetermined temperature 1350. In this example, the heating control system 1316 is also configured to maintain the mixed resin 1303 in the first intermediate volume 1308 at the predetermined temperature 1350.

In still yet another example of the system 1800, the mixed resin retention assembly 1300 also includes at least one monitoring device 1320, a positioning control system 1322 and a positioning assembly 1518. The at least one monitoring device 1320 configured to detect at least one parameter associated with the flow of the mixed resin 1303 to obtain at least one measurement 1420. The positioning control system 1322 in operative communication with the at least one monitoring device 1320 to receive the at least one measurement 1420. The positioning control system 1322 is configured to compare the at least one measurement 1420 to a corresponding at least one predetermined threshold 1406 associated with a predetermined triggering event 1402. The positioning assembly 1518 configured to move at least one of the inlet spout 1302 and the intermediate vessel 1307 from a first position 1520 in which the mixed resin 1303 is directed to the first intermediate volume 1308 and a second position 1522 in which the mixed resin 1303 is directed to the second intermediate volume 1310 after the predetermined triggering event 1402. The positioning control system 1322 is in operative communication with the positioning assembly 1518. The positioning control system 1322 configured to control movement of the positioning assembly 1518 between the first position 1520 and the second position 1522 in response to the predetermined triggering event 1402.

In still yet another example of the system 1800, the mixed resin retention assembly 1300 also includes an outlet 1516 configured to dispense the mixed resin 1303 from the second intermediate volume 1310. In a further example, the system 1800 also includes a mixed resin dispensing subsystem 1326 configured to receive the mixed resin 1303 from the second intermediate volume 1310 via the outlet 1516 of the mixed resin retention assembly 1300 and configured to pump the mixed resin 1303 from the second intermediate volume 1310 to at least one resin infusion tool 1324 and/or at least one resin molding tool 1328.

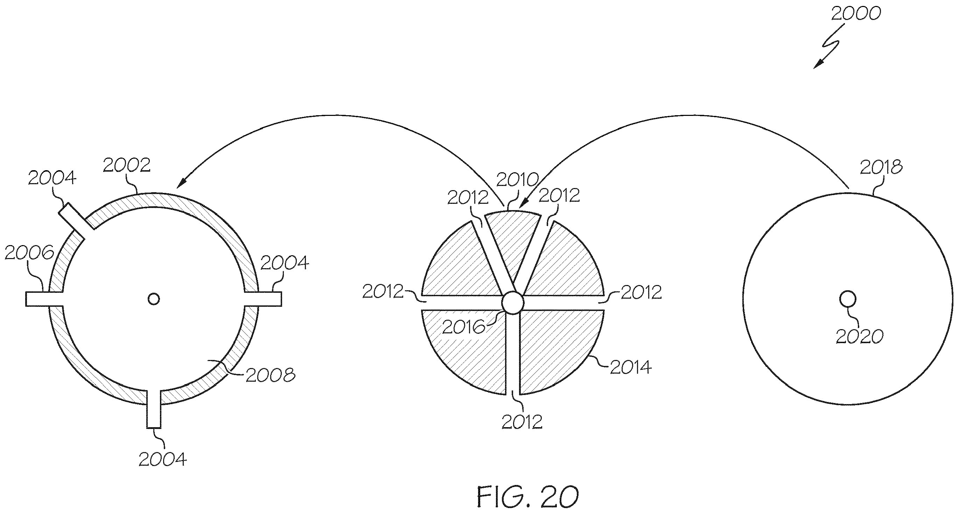

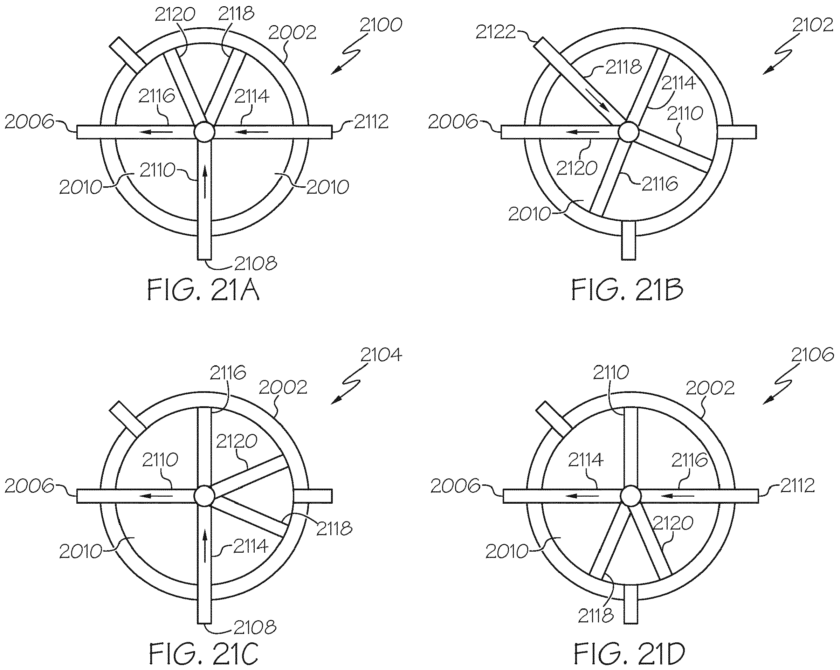

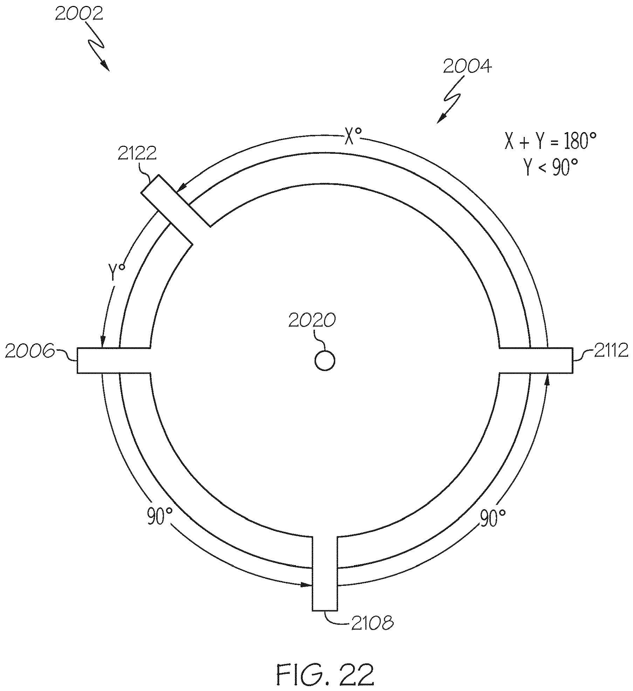

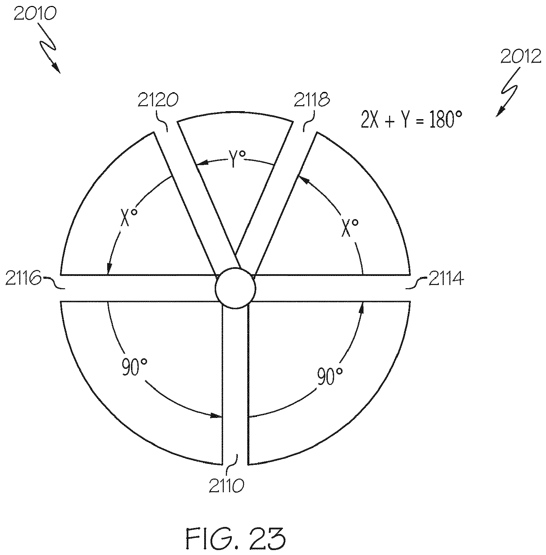

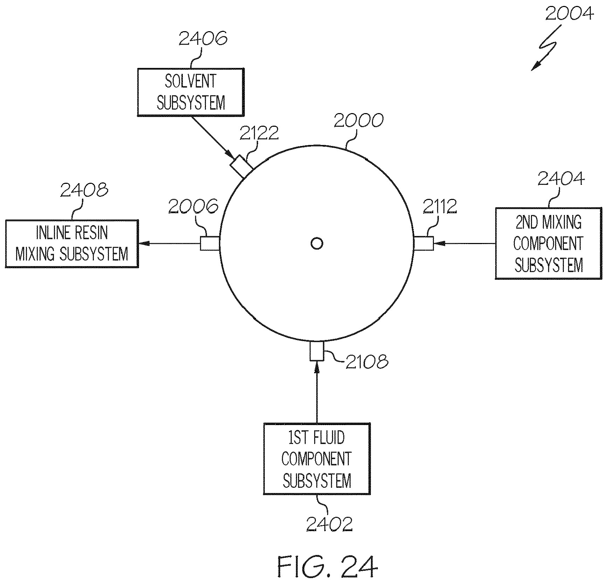

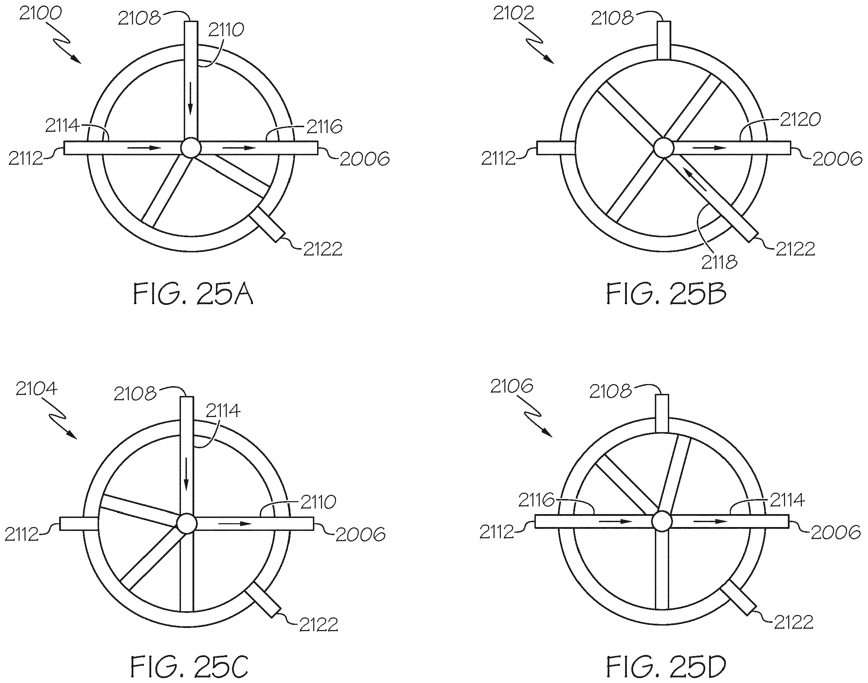

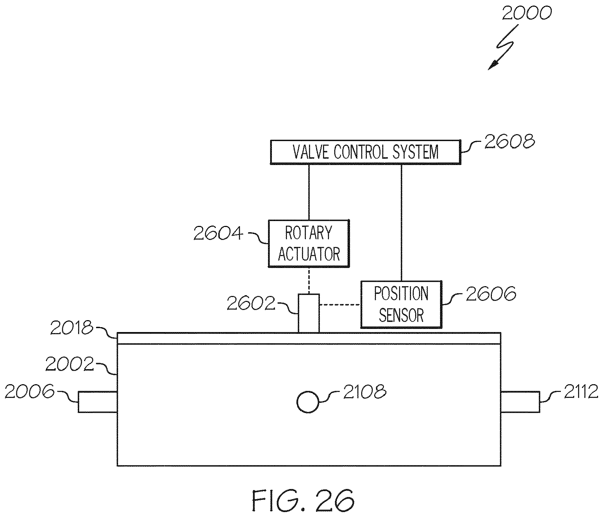

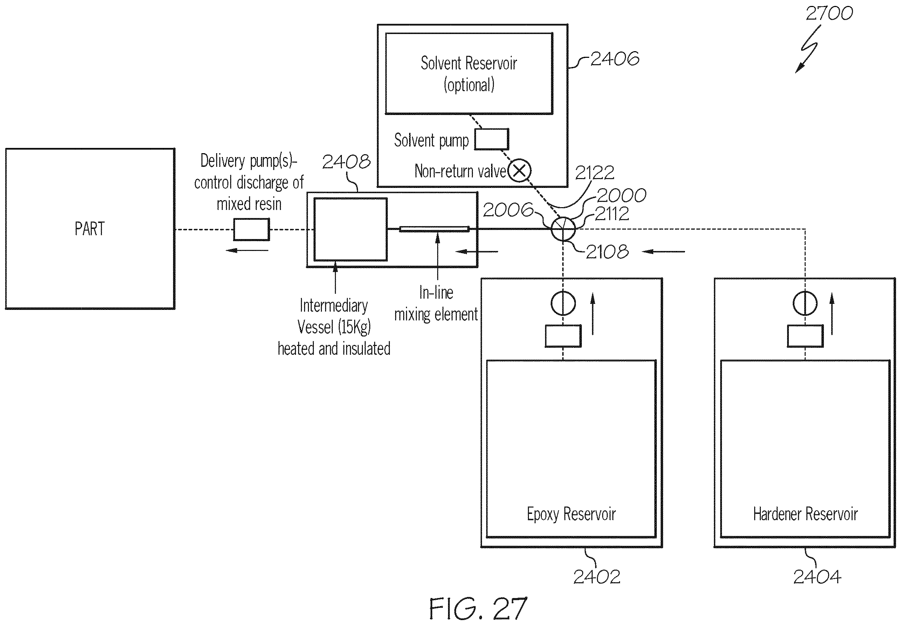

Referring generally to Figs. 20, 21A-D, 22-24, 25A-D, 26 and 27, by way of examples, the present disclosure is directed to a valve assembly 2000 for inline resin mixing and a system 2700 for inline resin mixing that implements the valve assembly 2000. Fig. 20 discloses an example of the valve assembly 2000 with an exterior valve body 2002, an interior valve body 2010 and a cover 2018 in disassembled fashion. Figs. 21A-D disclose examples of four positions of the valve assembly 2000. Fig. 22 discloses an example of the exterior valve body 2002 of the valve assembly 2000. Fig. 23 discloses an example of the interior valve body 2010 of the valve assembly 2000. Fig. 24 discloses an example of system connections for the valve assembly 2000. Figs. 25A-D disclose examples of four positions of the valve assembly 2000 and examples of system connections. Fig. 26 discloses another example of the valve assembly 2000 with a valve control system 2608. Fig. 27 discloses an example of the system 2700 that implements the valve assembly 2000.

With reference again to Figs. 20, 21A-D, 22-24 and 25A-D, in one or more examples, a valve assembly 2000 for inline resin mixing includes an exterior valve body 2002, an interior valve body 2010 and a cover 2018. The exterior valve body 2002 includes three input ports 2004 and an output port 2006 and defines an interior cavity 2008. The interior valve body 2010 is disposed within the interior cavity 2008 and defines five flow paths 2012 extending from a periphery 2014 of the interior valve body 2010 and intersecting at a central portion 2016 of the interior valve body 2010. The cover 2018 secured to the exterior valve body 2002 to enclose the interior valve body 2010 within the interior cavity 2008.

In another example of the valve assembly 2000, the five flow paths 2012 of the interior valve body 2010, the three input ports 2004 of the exterior valve body 2002, and the output port 2006 of the exterior valve body 2002 are configured to establish four positions 2100, 2102, 2104, 2106 of the interior valve body 2010 in relation to the exterior valve body 2002. For example, the valve assembly 2000 may be referred to as a five-way valve assembly.

In a further example, a first position 2100 of the interior valve body 2010 in relation to the exterior valve body 2002 is configured to connect a first input port 2108 through a first flow path 2110 and a second input port 2112 through a second flow path 2114 to the output port 2006 via a fifth flow path 2116. In the same example, the exterior valve body 2002 is configured to block a third flow path 2118 and to block a fourth flow path 2120 in the first position 2100.

In another further example, a second position 2102 of the interior valve body 2010 in relation to the exterior valve body 2002 is configured to connect a third input port 2122 through a third flow path 2118 to the output port 2006 via a fourth flow path 2120. In the same example, the exterior valve body 2002 is configured to block a first flow path 2110, a second flow path 2114 and a fifth flow path 2116 in the second position 2102.

In yet another further example, a third position 2104 of the interior valve body 2010 in relation to the exterior valve body 2002 is configured to connect a first input port 2108 through a second flow path 2114 to the output port 2006 via a first flow path 2110. In the same example, the exterior valve body 2002 is configured to block a third flow path 2118, a fourth flow path 2120 and a fifth flow path 2116 in the third position 2104.

In still another further example, a fourth position 2106 of the interior valve body 2010 in relation to the exterior valve body 2002 is configured to connect a second input port 2112 through a fifth flow path 2116 to the output port 2006 via a second flow path 2114. In the same example, the exterior valve body 2002 is configured to block a first flow path 2110, a third flow path 2118 and a fourth flow path 2120 in the fourth position 2106.

In yet another example of the valve assembly 2000, the three input ports 2004 of the exterior valve body 2002 include a first input port 2108, a second input port 2112 and a third input port 2122. The first input port 2108 being 90 degrees counterclockwise of the output port 2006. The second input port 2112 being 90 degrees counterclockwise of the first input port 2108. The third input port 2122 being X degrees counterclockwise of the second input port 2112. The output port 2006 being Y degrees counterclockwise of the third input port 2122. In this example, (X + Y) = 180 degrees and Y < 90 degrees.

In still another example of the valve assembly 2000, the five flow paths 2012 of the interior valve body 2010 comprise a first flow path 2110, a second flow path 2114, a third flow path 2118, a fourth flow path 2120 and a fifth flow path 2116. The first flow path 2110 being 90 degrees counterclockwise of the fifth flow path 2116. The second flow path 2114 being 90 degrees counterclockwise of the first flow path 2110. The third flow path 2118 being X degrees counterclockwise of the second flow path 2114. The fourth flow path 2120 being Y degrees counterclockwise of the third flow path 2118. The fifth flow path 2116 being X degrees counterclockwise of the fourth flow path 2120. In this example, (2X + Y) = 180 degrees.

In still yet another example of the valve assembly 2000, the three input ports 2004 include a first input port 2108, a second input port 2112 and a third input port 2122. The first input port 2108 configured to connect to a first mixing component subsystem 2402 to receive a first mixing component 1305. The second input port 2112 configured to connect to a second mixing component subsystem 2404 to receive a second mixing component 1306. The third input port 2122 configured to connect to a solvent subsystem 2406 to receive a solvent. In this example, the output port 2006 is configured to connect to an inline resin mixing subsystem 2408.

In a further example, the first mixing component 1305 includes at least one of a thermoset resin 1333, an epoxy resin 1334, a polyester resin 1336, a thermoplastic resin 1338 or any other suitable mixing component in any suitable combination. In another further example, the second mixing component 1306 includes a thermoset hardener 1340, an epoxy hardener 1342, a polyester hardener 1344, a hardener additive 1346, a catalyst 1348 or any other suitable mixing component in any suitable combination. In yet another further example, the solvent includes an isopropyl alcohol-based solvent, a denatured alcohol-based solvent, an acetone-based solvent, a toluene-based solvent or any other suitable solvent in any suitable combination.

In still another further example, the five flow paths 2012 of the interior valve body 2010, the three input ports 2004 of the exterior valve body 2002 and the output port 2006 of the exterior valve body 2002 are configured to establish four positions 2100, 2102, 2104, 2106 in which at least one flow path aligns with at least one input port and another flow path aligns with the output port 2006 in response to rotation of the interior valve body 2010 within the interior cavity 2008 of the exterior valve body 2002.

In an even further example, a first position 2100 of the interior valve body 2010 is configured to route the first mixing component 1305 via a first input port 2108 through a first flow path 2110 and to route the second mixing component 1306 via a second input port 2112 through a second flow path 2114 to the output port 2006 via a fifth flow path 2116 to establish a flow of a mixed resin 1303 to the inline resin mixing subsystem 2408. In the same example, the interior valve body 2010 is configured to block a third input port 2122 in the first position 2100.

In another even further example, a second position 2102 of the interior valve body 2010 is configured to route the solvent via a third input port 2122 through a third flow path 2118 to the output port 2006 via a fourth flow path 2120 to establish a flow of the solvent to the inline resin mixing subsystem 2408. In the same example, the interior valve body 2010 is configured to block a first input port 2108 and a second input port 2112 in the second position 2102.

In yet another even further example, a third position 2104 of the interior valve body 2010 is configured to route the first mixing component 1305 via a first input port 2108 through a second flow path 2114 to the output port 2006 via a first flow path 2110 to establish a flow of the first mixing component 1305 to the inline resin mixing subsystem 2408. In the same example, the interior valve body 2010 is configured to block a second input port 2112 and a third input port 2122 in the third position 2104.

In still another even further example, a fourth position 2106 of the interior valve body 2010 is configured to route the second mixing component 1306 via a second input port 2112 through a fifth flow path 2116 to the output port 2006 via a second flow path 2114 to establish a flow of the second mixing component 1306 to the inline resin mixing subsystem 2408. In the same example, the interior valve body 2010 is configured to block a first input port 2108 and a third input port 2122 in the fourth position 2106.

With reference again to Figs. 20, 21A-D and 26, in one or more examples, the valve assembly 2000 also includes a valve stem 2602 extending through an aperture 2020 of the cover 2018. The valve stem 2602 is secured to the interior valve body 2010. The valve stem 2602 is configured to facilitate rotation of the interior valve body 2010 within the interior cavity 2008 of the exterior valve body 2002.

In another example of the valve assembly 2000, the five flow paths 2012 of the interior valve body 2010, the three input ports 2004 of the exterior valve body 2002, and the output port 2006 of the exterior valve body 2002 are configured to establish four positions 2100, 2102, 2104, 2106 in which at least one flow path aligns with at least one input port and another flow path aligns with the output port 2006 in response to rotation of the interior valve body 2010 to each position via the valve stem 2602.

In yet another example, the valve assembly 2000 also includes a rotary actuator 2604, a position sensor 2606, and a valve control system 2608. The rotary actuator 2604 coupled to the valve stem 2602 and configured to rotate the interior valve body 2010 from an initial position to a desired position in relation to the four positions 2100, 2102, 2104, 2106. The position sensor 2606 is configured to detect a current position of the interior valve body 2010. The valve control system 2608 in operative communication with the rotary actuator 2604 and the position sensor 2606. The valve control system 2608 configured to receive a position signal from the position sensor 2606, to compare the position signal to the desired position, and to send a control signal to the rotary actuator 2604 causing the rotary actuator 2604 to move to the desired position.

In a further example, the rotary actuator 2604 includes a servo motor, a stepper motor, a variable speed electric motor, a gear box, and any other suitable rotary actuator in any suitable combination of control mechanisms.

In another further example, the position sensor 2606 includes a position encoder, a rotary potentiometer servo, a magnetic sensor, a gear box sensor or any other suitable position sensor in any suitable combination of sensing mechanisms.

With reference again to Figs. 13A-B, 20, 21A-D, 24 and 27, in one or more examples, a system 2700 for inline resin mixing includes the valve assembly 2000, a first mixing component subsystem 2402, a second mixing component subsystem 2404, a solvent subsystem 2406 and an inline resin mixing subsystem 2408. The valve assembly 2000 includes the exterior valve body 2002, the interior valve body 2010 and the cover 2018. The first mixing component subsystem 2402 coupled to a first input port 2108 of the exterior valve body 2002. The first mixing component subsystem 2402 configured to provide a first flow of a first mixing component 1305 to the valve assembly 2000. The second mixing component subsystem 2404 coupled to a second input port 2112 of the exterior valve body 2002. The second mixing component subsystem 2404 configured to provide a second flow of a second mixing component 1306 to the valve assembly 2000. The solvent subsystem 2406 coupled to a third input port 2122 of the exterior valve body 2002. The solvent subsystem 2406 configured to provide a third flow of a solvent to the valve assembly 2000. The inline resin mixing subsystem 2408 coupled to the output port 2006 of the exterior valve body 2002. The inline resin mixing subsystem 2408 is configured to receive a fourth flow of a mixed resin 1303 from the valve assembly 2000 in conjunction with a first position 2100 of the valve assembly 2000. The inline resin mixing subsystem 2408 is also configured to receive the third flow of the solvent in conjunction with a second position 2102 of the valve assembly 2000.

In another example of the system 2700, the inline resin mixing subsystem 2408 is configured to receive the first flow of the first mixing component 1305 in conjunction with a third position 2104 of the valve assembly 2000.

In yet another example of the system 2700, the inline resin mixing subsystem 2408 is configured to receive the second flow of the second mixing component 1306 in conjunction with a fourth position 2106 of the valve assembly 2000.

Examples of mixed resin retention assemblies 1300, valve assemblies 2000 and systems 1800, 2700 for inline resin mixing may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of thermoset products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-12, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 1-12 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

In Figs. 13A-B, 14, 15A, 15B1-2, 16-20, 21A-D, 22-24, 25A-D, 26 and 27, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 13A-B, 14, 15A, 15B1-2, 16-20, 21A-D, 22-24, 25A-D, 26 and 27, referred to above, need be included in every example and not all elements, features and/or components described herein are necessarily depicted in each illustrative example. Accordingly, some of the elements, features and/or components described and illustrated in Figs. 13A-B, 14, 15A, 15B1-2, 16-20, 21A-D, 22-24, 25A-D, 26 and 27 may be combined in various ways without the need to include other features described and illustrated in Figs. 13A-B, 14, 15A, 15B1-2, 16-20, 21A-D, 22-24, 25A-D, 26 and 27, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 13A-B, 14, 15A, 15B1-2, 16-20, 21A-D, 22-24, 25A-D, 26 and 27, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 13A-B, 14, 15A, 15B1-2, 16-20, 21A-D, 22-24, 25A-D, 26 and 27 and such elements, features and/or components may not be discussed in detail herein with reference to each of Figs. 13A-B, 14, 15A, 15B1-2, 16-20, 21A-D, 22-24, 25A-D, 26 and 27. Similarly, all elements, features and/or components may not be labeled in each of Figs. 13A-B, 14, 15A, 15B1-2, 16-20, 21A-D, 22-24, 25A-D, 26 and 27, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

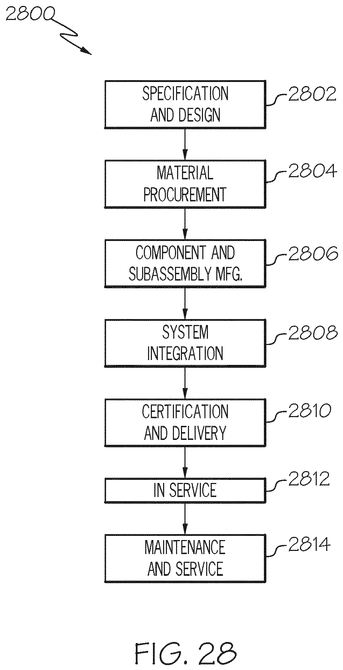

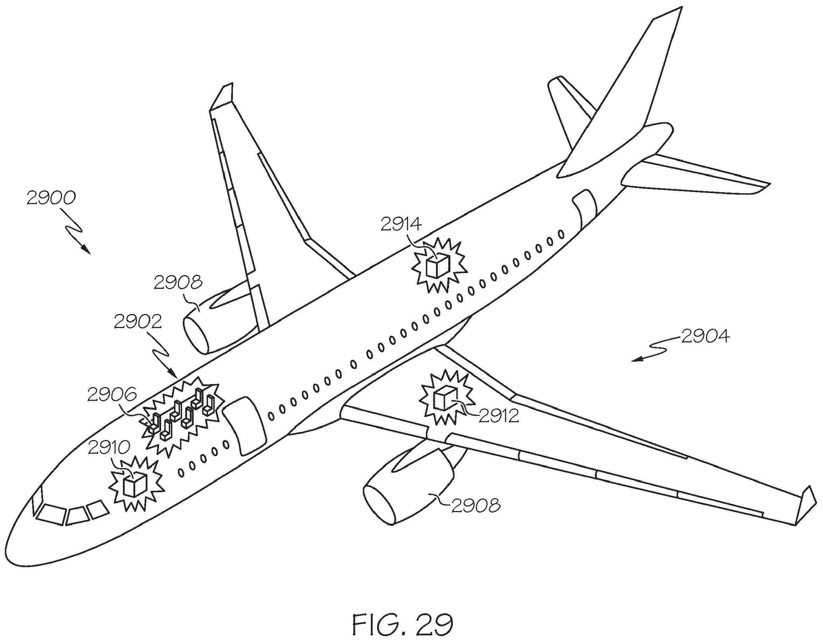

Examples of the subject matter disclosed herein may be described in the context of aircraft manufacturing and service method 2800 as shown in Fig. 28 and aircraft 2900 as shown in Fig. 29. In one or more examples, the disclosed methods and systems for associating test data for a part under test with an end item coordinate system may be used in aircraft manufacturing. During pre-production, the service method 2800 may include specification and design (block 2802) of aircraft 2900 and material procurement (block 2804). During production, component and subassembly manufacturing (block 2806) and system integration (block 2808) of aircraft 2900 may take place. Thereafter, aircraft 2900 may go through certification and delivery (block 2810) to be placed in service (block 2812). While in service, aircraft 2900 may be scheduled for routine maintenance and service (block 2814). Routine maintenance and service may include modification, reconfiguration, refurbishment, etc. of one or more systems of aircraft 2900.

Each of the processes of the service method 2800 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 29, aircraft 2900 produced by the service method 2800 may include airframe 2902 with a plurality of high-level systems 2904 and interior 2906. Examples of high-level systems 2904 include one or more of propulsion system 2908, electrical system 2910, hydraulic system 2912 and environmental system 2914. Any number of other systems may be included. Although an aerospace example is shown, the principles disclosed herein may be applied to other industries, such as the automotive industry. Accordingly, in addition to aircraft 2900, the principles disclosed herein may apply to other vehicles, e.g., land vehicles, marine vehicles, space vehicles, etc.

The disclosed systems and methods for associating test data for a part under test with an end item coordinate system may be employed during any one or more of the stages of the manufacturing and service method 2800. For example, components or subassemblies corresponding to component and subassembly manufacturing (block 2806) may be fabricated or manufactured in a manner similar to components or subassemblies produced while aircraft 2900 is in service (block 2812). Also, one or more examples of the system(s), method(s), or combination thereof may be utilized during production stages (block 2806 and block 2808), for example, by substantially expediting assembly of or reducing the cost of aircraft 2900. Similarly, one or more examples of the system or method realizations, or a combination thereof, may be utilized, for example and without limitation, while aircraft 2900 is in service (block 2812) and/or during maintenance and service (block 2814).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 200, 300, 400, 500, 600, 700, 800, 900, 1000, 1100, 1200, mixed resin retention assemblies 1300, valve assemblies 2000 and systems 1800, 2700 for inline resin mixing have been shown and described, modifications may occur to those skilled in the art upon reading the specification. The present application includes such modifications and is limited only by the scope of the claims.

## Claims

1. A method (100) for inline resin mixing, comprising:
establishing (102) a flow of a mixed resin (1303) comprising a first mixing component (1305) and a second mixing component (1306);
directing (104) at least an initial portion (1309) of the mixed resin (1303) to a first intermediate volume (1308); and
subsequently directing (106) a remainder (1311) of the mixed resin (1303) to a second intermediate volume (1310) after a predetermined triggering event (1402) relating to a continuing flow (1330) of the mixed resin (1303).

2. The method of Claim 1, wherein the predetermined triggering event (1402) indicates a ratio of the first mixing component (1305) to the second mixing component (1306) in the flow is within an acceptable tolerance (1404) of a predetermined threshold (1406).

3. The method of Claim 1 or 2, further comprising:
receiving (108) the flow of the mixed resin (1303) at an inlet spout (1302) configured to initially direct (1410) the mixed resin (1303) to the first intermediate volume (1308) and configured to subsequently direct (1412) the mixed resin (1303) to the second intermediate volume (1310).

4. The method of Claim 3, wherein an intermediate vessel (1307) comprises the first intermediate volume (1308) and the second intermediate volume (1310).

5. The method of Claim 4, wherein the intermediate vessel (1307) further comprises a first base level (1502), a second base level (1504) above the first base level (1502), a connecting wall (1506) between an interior portion (1508) of the first base level (1502) and an interior portion (1508) of the second base level (1504) and an exterior wall (1510) extending from an exterior portion (1512) of the first base level (1502) and an exterior portion (1512) of the second base level (1504) to an opening (1514) to the intermediate vessel (1307), the first intermediate volume (1308) defined from the first base level (1502) upward to the second base level (1504), the second intermediate volume (1310) defined from the second base level (1504) upward toward the opening (1514).

6. The method (200) of Claim 5, further comprising:
moving (202) at least one of the inlet spout (1302) and the intermediate vessel (1307) from a first position (1520) in which the mixed resin (1303) is directed to the first intermediate volume (1308) to a second position (1522) in which the mixed resin (1303) is directed to the second intermediate volume (1310) after the predetermined triggering event (1402), preferably wherein:
the inlet spout (1302) is configured to swivel (1418) from the first position (1520) to the second position (1522) in response to the predetermined triggering event (1402); and/or
the intermediate vessel (1307) is configured to move (1524) from the first position (1520) to the second position (1522) in response to the predetermined triggering event (1402); and/or
the intermediate vessel (1307) further comprises a partitioning wall (1604) extending from the first base level (1502) toward the opening (1514) of the intermediate vessel (1307) to physically isolate (1606) the first intermediate volume (1308) from the second intermediate volume (1310).

7. The method of any one of Claims 4-6, wherein the intermediate vessel (1307) further comprises a base level (1602) and an exterior wall (1510) extending from an exterior portion (1512) of the base level (1602) to an opening (1514) to the intermediate vessel (1307).

8. The method of Claim 7, wherein:
the intermediate vessel (1307) further comprises a partitioning wall (1604) extending from the base level (1602) toward the opening (1514) of the intermediate vessel (1307) to physically isolate (1606) the first intermediate volume (1308) from the second intermediate volume (1310), the method preferably further comprising moving (302) at least one of the inlet spout (1302) and the intermediate vessel (1307) from a first position (1520) in which the mixed resin (1303) is directed to the first intermediate volume (1308) to a second position (1522) in which the mixed resin (1303) is directed to the second intermediate volume (1310) after the predetermined triggering event (1402); and/or
the intermediate vessel (1307) further comprises an outlet (1516) disposed along the exterior wall (1510) for dispensing mixed resin (1303) from the second intermediate volume (1310), the outlet (1516) disposed above the first intermediate volume (1308) such that the mixed resin (1303) in the first intermediate volume (1308) is not dispensed through the outlet (1516) when the mixed resin (1303) is dispensed from the second intermediate volume (1310), the first intermediate volume (1308) defined from the base level (1602) upward to the outlet (1516), the second intermediate volume (1310) defined from the first intermediate volume (1308) upward toward the opening (1514).

9. The method (500) of any one of Claims 1 - 8, further comprising:
agitating (502) the mixed resin (1303) in the second intermediate volume (1310);
heating (504) the mixed resin (1303) in the second intermediate volume (1310) to a predetermined temperature (1350);
maintaining (506) the mixed resin (1303) in the second intermediate volume (1310) at the predetermined temperature (1350); and
insulating (508) the mixed resin (1303) in the second intermediate volume (1310) to facilitate maintaining the predetermined temperature (1350).

10. The method (700) of any one of Claims 1-9, further comprising:
monitoring (702) a parameter associated with the flow of the mixed resin (1303) to obtain a measurement (1420);
comparing (704) the measurement (1420) to a predetermined threshold (1406) associated with the predetermined triggering event (1402); and
changing (706) the directing of the mixed resin (1303) from the first intermediate volume (1308) to the second intermediate volume (1310) after the measurement (1420) exceeds the predetermined threshold (1406), and preferably further comprising:
comparing (802) the measurement (1420) to a second predetermined threshold (1438) associated with conclusion of the continuing flow (1330) of the mixed resin (1303) to the second intermediate volume (1310);
after the measurement (1420) is more than the second predetermined threshold (1438), adjusting (804) direction of the mixed resin (1303) from the second intermediate volume (1310) to the first intermediate volume (1308) such that a next flow (1368) of the mixed resin (1303) would be initially directed (1410) to the first intermediate volume (1308); and
draining (806) the mixed resin (1303) from the first intermediate volume (1308).

11. The method of Claim 10, wherein the measurement (1420) comprises at least one of a flow time measurement (1422), a mixed resin viscosity measurement (1424), a mixed resin flow measurement (1426), a mixed resin volume measurement (1428), a mixed resin weight measurement (1430) and a mixed resin concentration measurement (1432), preferably wherein:
the mixed resin viscosity measurement (1424) is based on measurements (1420) of a dynamic mixed resin pressure (1354) and a mixed resin temperature (1356) by a viscometer (1358); and/or
the mixed resin flow measurement (1426) is based on measurements (1420) by ultrasonic sensors (1360); and/or
the mixed resin volume measurement (1428) is based on a fluid level measurement (1436) for the first intermediate volume (1308); and/or
the mixed resin weight measurement (1430) is based on a mixed resin weight measurement (1430) for the first intermediate volume (1308); and/or
the mixed resin concentration measurement (1432) is based on a concentration measurement (1432) by a refractometer (1362).

12. The method (900) of any one of Claims 1 - 11, further comprising:
dispensing (902) the mixed resin (1303) from the second intermediate volume (1310) to a next stage of processing; and/or
dispensing (1002) the mixed resin (1303) from the second intermediate volume (1310) to at least one resin infusion tool (1324); and/or
dispensing (1102) the mixed resin (1303) from the second intermediate volume (1310) to at least one resin molding tool (1328); and/or
draining (1202) the mixed resin (1303) from the first intermediate volume (1308) after the mixed resin (1303) is directed to the second intermediate volume (1310).

13. A mixed resin retention assembly (1300) for inline resin mixing, comprising:
an inlet spout (1302) configured to receive a flow of a mixed resin (1303) from a mixed resin supply subsystem (1304), the mixed resin (1303) comprising a first mixing component (1305) and a second mixing component (1306); and
an intermediate vessel (1307) comprising a first intermediate volume (1308) and a second intermediate volume (1310), the first intermediate volume (1308) configured to hold at least an initial portion (1309) of the mixed resin (1303), the second intermediate volume (1310) configured to hold a remainder (1311) of the mixed resin (1303), and
wherein the inlet spout (1302) and the intermediate vessel (1307) are configured such that the mixed resin (1303) is initially directed (1410) to the first intermediate volume (1308) and subsequently directed (1412) to the second intermediate volume (1310) in response to a predetermined triggering event (1402) related to a continuing flow (1330) of the mixed resin (1303).

14. A system (1800) for inline resin mixing, the system comprising:
a mixed resin supply subsystem (1304) comprising:
a first reservoir (1902) configured to hold a volume of a first mixing component (1305);
a first pump (1904) configured to draw the first mixing component (1305) from the first reservoir (1902);
a second reservoir (1906) configured to hold a volume of a second mixing component (1306);
a second pump (1908) configured to draw the second mixing component (1306) from the second reservoir (1906);
a three-way valve (1910) comprising a first inlet connection (1912), a second inlet connection (1914) and an outlet connection (1916), the three-way valve (1910) configured to receive the first mixing component (1305) from the first pump (1904) at the first inlet connection (1912), configured to receive the second mixing component (1306) from the second pump (1908) at the second inlet connection (1914) and configured to establish a flow of a mixed resin (1303) via the outlet connection (1916) in conjunction with the first and second pumps (1904, 1908) drawing the first and second mixing components (1305, 1306) from the first and second reservoirs (1902, 1904);
a plurality of first supply lines (1918) interconnecting the first reservoir (1902), the first pump (1904) and the first inlet connection (1912) of the three-way valve (1910);
a plurality of second supply lines (1920) interconnecting the second reservoir (1906), the second pump (1908) and the second inlet connection (1914) of the three-way valve (1910); and
at least one mixed resin supply line (1922) connected to the outlet connection (1916) of the three-way valve (1910);
a mixed resin retention assembly (1300) comprising:
an inlet spout (1302) connected to the at least one mixed resin supply line (1922), the inlet spout (1302) configured to receive the flow of the mixed resin (1303) via the at least one mixed resin supply line (1922); and
an intermediate vessel (1307) comprising a first intermediate volume (1308) and a second intermediate volume (1310), the first intermediate volume (1308) configured to hold at least an initial portion (1309) of the mixed resin (1303), the second intermediate volume (1310) configured to hold a remainder (1311) of the mixed resin (1303).

15. A valve assembly (2000) for inline resin mixing, comprising
an exterior valve body (2002) comprising three input ports (2004) and an output port (2006) and defining an interior cavity (2008);
an interior valve body (2010) disposed within the interior cavity (2008) and defining five flow paths (2012) extending from a periphery (2014) of the interior valve body (2010) and intersecting at a central portion (2016) of the interior valve body (2010); and
a cover (2018) secured to the exterior valve body (2002) to enclose the interior valve body (2010) within the interior cavity (2008).
